# EUROPEAN PATENT SPECIFICATION

(11) **EP 2 801 187 B1**
(45) Date of publication and mention of the grant of the patent: **27.09.2017**
(21) Application number: 13733754.9
(22) Date of filing: 04.01.2013
(51) Int. Cl.: H04L 12/18, H04L 29/06, H04M 3/56

(54) **CENTRAL CONFERENCING ROUTING SERVER**
ZENTRALER KONFERENZ-ROUTING-SERVER
SERVEUR DE ROUTAGE DE CONFÉRENCE CENTRAL

(30) Priority: 06.01.2012 US 201261584115 P; 06.01.2012 US 201261584122 P; 07.12.2012 US 201213708678; 07.12.2012 US 201213708659; 07.12.2012 US 201213708636; 07.12.2012 US 201213708689
(43) Date of publication of application: 12.11.2014
(73) Proprietor: Level 3 Communications, LLC, Broomfield, CO 80021 (US)
(72) Inventor: ELLISON, Gregory Thomas, Erie, Colorado 80516 (US); BROADWORTH, Andrew James, Thornton, Colorado 80602 (US)
(74) Representative: Ford, Esther Mary
(86) International application number: PCT/US2013/020244
(87) International publication number: WO 2013/103784

(56) References cited:
- EP-A1- 2 053 869
- EP-A1- 2 053 869
- US-A- 5 825 858
- US-A1- 2001 002 927
- US-A1- 2001 002 927
- US-A1- 2004 047 460
- US-A1- 2005 058 125
- US-A1- 2005 213 517
- US-A1- 2007 217 589
- US-A1- 2009 019 367
- US-B1- 6 411 605
- "Telecommunications and Internet converged Services and Protocols for Advanced Networking (TISPAN); Release 2;PSTN/ISDN simulation services: Conference (CONF); Protocol specification;13bTD300 WI03083_Discussion of 3PTY", ETSI DRAFT; 13BTD300 WI03083_DISCUSSION OF 3PTY, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, no. V0.0.3, 20 March 2007 (2007-03-20), pages 1-20, XP014138665,

## Description

### Cross-Reference to Related Applications

This application claims priority under 35 U.S.C. § 119(e) to provisional patent application no. 61/584,115 titled "CENTRAL CONFERENCING ROUTING SERVICE" and provisional patent application 61/584,122 titled "CENTRAL CONFERENCING ROUTING SERVICE," both filed on January 6, 2012. This application claims priority under 35 U.S.C. § 119(e) to United States Provisional Application No. 61/578,794 entitled "SIP-BASED VOIP COLLABORATION", United States Provisional Application No. 61/578,798 entitled "SIP-BASED VOIP COLLABORATION", United States Provisional Application No. 61/578,803 entitled "SIP-BASED VOIP COLLABORATION", United States Provisional Application No. 61/578,807 entitled "SIP-BASED VOIP COLLABORATION" and United States Provisional Application No. 61/578,810 entitled "SIP-BASED VOIP COLLABORATION" all filed on December 21, 2011. In addition, this application is related to concurrently filed patent application titled "METHOD FOR ROUTING IN A CENTRAL CONFERENCE ROUTING SERVER", Attorney Docket No. 0408-US-U2, patent application titled "LOAD BALANCING IN A CENTRAL CONFERENCING ROUTING SERVER", Attorney Docket No. 0408-US-U3 and patent application titled "DISASTER RECOVERY WITH A CENTRAL CONFERENCING ROUTING SERVER", Attorney Docket No. 0408-US-U4.

### Technical Field

Embodiments of the present disclosure generally relate to systems and methods that provide for collaboration conferencing with multiple participants using devices connected to a telecommunication network, including a VoIP network, and more specifically for a conferencing routing service for managing and routing collaboration participants.

### Background

Telecommunication networks provide for the transmission of information across some distance through terrestrial, wireless or satellite communication networks. Such communications may involve voice, data or multimedia information, among others. In addition, telecommunication networks often offer features and/or services to the customers of the network that provide flexible and varied ways in which the communications are transmitted over the network. For example, some telecommunication networks provide a conferencing feature that allows several users of the network to communicate at once, rather than a simple person-to-person communication. The number of participants to a conference communication may range from several users to several thousand users communicating on the same telephonic, video and/or data call.

Typically, conferencing communications require participants to the conference to place a telephonic call to a dedicated conferencing number. Some networks also require the participants enter a conference call code into the keypad of a telephonic device. The conferencing number and code are then utilized by the telecommunications network to connect that participant to a conference bridge device. In general, a conference bridge is a telecommunications device that hosts the participants of a conferencing communication such that the participants can participate in a conference call. Thus, the network typically receives the dialed number and conference code from each participant and connects the participant to the conference bridge. Once connected to the conference bridge, the participant may take part in the conference. To ensure that each of the participants of the conference may take part in the communication, each participant must connect to the same conference bridge.

It is with these and other issues in mind, among others, that various aspects of the present disclosure were conceived and developed.

US patent application (US2007/217589A1, publication date September 20, 2007, 2016) relates to VOIP conferencing. A VOIP-based conferencing system readily handles different protocols, load balance media resources and deals with fail-over situations. The VOIP conferencing system has a gateway coupled to the PSTN (Public Switched Telephone Network). A Voice Server Director (VSD) is coupled to the gateway and performs the control function of the conferencing system. The VSD has a back-to-back user agent. The VSD controls a media server, which mixes the audio (signals), and the media server receives the data portion of a conference call from the gateway. The media server is coupled to a bridge that controls an on-going conference.

Protocol specification "Telecommunications and Internet converged Services and Protocols for Advanced Networking (TISPAN); Release 2; PSTN/ISDN simulation services: Conference (CONF); Protocol specification, 13bTD300 WI03083_Discussion of 3PTY", vol. zAchive, no. V0.0.3, pages 1-20, XP0141 38665, date 20 March 2007, relates to a stage three, Protocol Description of the Conference (CONF) service based on the stage one and two of the ISDN CONF supplementary service. Within the Next Generation Network (NGN) the stage 3 is specified using the IP-Multimedia Call Control Protocol based on Session Initiation Protocol (SIP) and Session Description Protocol (SDP).

US patent application US2004/047460A1 (publication date March 11, 2004) relates to a conferencing method for providing reservation-less instant group conferencing. A subscriber dials in a conference code and a group code in his/her phone. The input signal is received in the switch serving the phone on sensing the conference code activates a trigger which results in communications with a conferencing system. The conference call is set up in a conferencing bridge and the phone of the subscriber is routed to the conferencing bridge. The conferencing system using group code obtains a group of phone numbers of participants from a database and calls each participant and connects each call participant to the conference call. Subscriber setting lists of participants and phone numbers in advance of the conference call with Internet access to the database.

European patent application EP2053869A1 (publication date April 29, 2009) relates to a control system (CCS) having trunks to receive setup signaling messages for setting up call sessions in a communication network, means to detect that a setup signaling message corresponds to a conference service requiring a conference bridge enabling a user to participate in and control a simultaneous communication involving a number of users, and means to host a conference bridge associated to said conference service on a media server (MS) that is selected from a pool of media servers capable of hosting conference bridges. This call control system further comprises means for determining said media server (MS) according to the geographical region of said media server (MS), said geographical region being determined at least from a key verification relative to said setup signaling message.
US patent application US2001/002927A1 (June 7, 2001) relates to an on-demand teleconferencing system and method for setting up an on-demand conference call in a telecommunications system having the Advanced Information Network (AIN) architecture with system signaling the number 7 (SS7) and a Public Switched Telephone Network (PSTN). A subscriber is assigned an on-demand conference call number. When that number is dialed into the PSTN, it is identified by the PSTN that the dialed number requires handling by the SS7. The SS7 links the dialed number to a conference allocation and control system (CACS) which is connected to a plurality of scalable bridge servers. The CACS selects bridge servers available to handle the conference call and based upon a selection criteria such as a peak load sets up the on-demand conference call in one of the selected bridge servers.

### Summary

According to a first aspect of the present invention, there is provided a method for routing one or more collaboration conference access requests, according to claim 1.

According to a second aspect of the present invention, there is provided a telecommunications network according to claim 12.

Preferred embodiments are defined in the dependent claims.

### Brief Description Of The Drawings

Figure 1 schematic diagram illustrating an exemplary Voice over Internet Protocol (VoIP) operating environment, including a central conferencing routing server, in accordance with one embodiment.
Figure 2 is a block diagram illustrating a conference bridge configured to host one or more conferencing communications.
Figure 3A is a flowchart of a method for the CCRS of the network 102 to receive a request from one or more participants to join a collaboration session and route the participants to the proper conference bridge.
Figure 3B is a flowchart illustrating a method for a central conferencing routing server to receive a request for a collaboration conference and associating a master identification number to the collaboration conference.
Figure 4 is a block diagram illustrating several components of a central conferencing routing server.
Figure 5 is a diagram illustrating an example of a computing system which may be used in implementing embodiments of the present disclosure.
Figure 6 is a block diagram of a plurality of central conferencing routing servers connected to a plurality of conference bridges over a telecommunications network.
Figure 7 is a flowchart of a method for a control engine of a central conferencing server to gather connection information for the telecommunications network.
Figure 8 is a flowchart of a method for a plurality of control engines of conferencing servers to establish a master control engine.
Figure 9A is a block diagram of the network of Figure 6 illustrating a faulty connection between two central conferencing routing servers.
Figure 9B is a block diagram of the network of Figure 6 illustrating a faulty connection between a central conferencing routing server and a conference bridge.
Figure 10 is a flowchart of a method for a establishing a conferencing collaboration on a conference bridge.
Figure 11 is a block diagram of a central conferencing routing server connected to a plurality of conference bridges over a telecommunications network.
Figure 12 is a flowchart of a method for utilizing a routing rule and a priority list to select a conference bridge from a plurality of available conference bridges.
Figure 13 is a diagram illustrating a priority table of a plurality of available conference bridges for a routing rule of a customer to a telecommunications network.
Figure 14 is a flowchart of a method for performing load analysis of one or more conference bridges of a telecommunication network.
Figure 15 is a flowchart of a method for placing a conference bridge in a conferencing system offline.
Figure 16 is a flowchart of a method for disaster recovery of a conferencing system after a failure at a conference bridge.

### Detailed Description

One implementation of the present disclosure may take the form of a method for routing one or more collaboration conference access requests. The method may include the operations of receiving a collaboration conference access request from a requester's telephonic device and associating an identification number with the collaboration conference access request, the identification number associated with a customer of a telecommunications network. Based on the collaboration conference access request and identification number, a hosting conference bridge from a plurality of conference bridges associated with the telecommunications network and configured to host a collaboration conference is selected. In addition, the method may include the operation of transmitting one or more routing messages to the telecommunications network, wherein the one or more routing messages include an indication of the selected conference bridge.

Another implementation of the present disclosure may take the form of a system for selecting a conference bridge associated with a network for hosting a collaboration conference event. The system may include a network interface unit configured to receive a communication from a user of a communications network to establish a collaboration conference on the network, a processing device in communication with the network interface unit and a computer-readable medium connected to the processing device configured to store information and instructions. The instructions, when executed by the processing device, cause the system to perform the operations of transmitting one or more requests for performance information from one or more conference bridges associated with the network, analyzing the performance information from the one or more conference bridges associated with the network and selecting one of the one or more conference bridges associated with the network for hosting the conference event based at least on the performance information.

Yet another implementation of the present disclosure may take the form of a method for hosting a collaboration conference access requests. The method may include the operations of receiving a collaboration conference access request from a requester's telephonic device, the request comprising a requester identification and an access code, associating a conference identification number with the requester identification and an access code of the collaboration conference access request and selecting a hosting conference bridge from a plurality of conference bridges associated with the telecommunications network and configured to host a collaboration conference, wherein the hosting conference bridge is a session initiation protocol (SIP) based telecommunication device. In addition, the method may include the operations of transmitting a SIP-based request message to the selected hosting conference bridge, wherein the SIP-based request message comprises at least the conference identification number and transmitting one or more SIP refer routing messages to the telecommunications network, wherein the one or more routing messages comprises at least an internet protocol (IP) address of the selected hosting conference bridge.

Still another implementation of the present disclosure may take the form of a telecommunications network. The network comprises a plurality of collaboration conferencing routing servers comprising a master conferencing routing server executing a master control engine application and at least one slave conferencing routing server, wherein each of the plurality of collaboration conferencing routing servers comprises a database configured to store a state of at least one initiated collaboration conferences on the telecommunications network and a plurality of conference bridges configured to host a collaboration conference connected to the plurality of collaboration conferencing routing servers. In addition, the master control engine is configured to perform certain operations. Such operations include receiving a collaboration conference access request from a requester to initiate a collaboration conference, associating an identification number with the collaboration conference access request, the identification number associated with a customer of a telecommunications network selecting a hosting conference bridge from the plurality of conference bridges, the selection occurring in response to the collaboration conference access request and identification number and transmitting one or more conference state messages to the at least one slave conferencing routing server, wherein the one or more conference state messages include an active state of the at least one initiated collaboration conference and an indication of the selected conference bridge.

Another implementation of the present disclosure may take the form of method for routing one or more collaboration conference access requests. The method may include the operations of receiving a collaboration conference access request from a requester's telephonic device at a master conferencing routing server of a plurality of conferencing routing servers, wherein the a master conferencing routing server executes a master control engine application and associating an identification number with the collaboration conference access request, the identification number associated with a customer of a telecommunications network. In addition, the method may include selecting a hosting conference bridge from a plurality of conference bridges connected to the plurality of conferencing routing servers, the hosting conference bridge configured to host a collaboration conference, the selection occurring in response to the collaboration conference access request and identification number and transmitting one or more routing messages to the telecommunications network, wherein the one or more routing messages include an indication of the selected conference bridge.

Yet another implementation of the present disclosure may take the form of a method for routing one or more collaboration conference access requests in a telecommunications network. The method may include the operations of receiving a collaboration conference access request from a requester's telephonic device, associating an identification number with the collaboration conference access request, the identification number associated with a customer of a telecommunications network and requesting operational information of at least one conference bridge of a plurality of conference bridges connected to a telecommunications network, the operational information comprising at least the available capacity for the at least one conference bridge. The method may also include the operations of selecting a hosting conference bridge from the plurality of conference bridges associated with the telecommunications network and configured to host a collaboration conference, the selection occurring at least in response to the operational information of the plurality of conference bridges and transmitting one or more routing messages to the telecommunications network, wherein the one or more routing messages include an indication of the selected conference bridge.

Still another implementation of the present disclosure may take the form of a system for selecting a conference bridge associated with a network for hosting a collaboration conference event. The system comprises a network interface unit configured to receive a communication from a user of a communications network to establish a collaboration conference on the network, a processing device in communication with the network interface unit and a computer-readable medium connected to the processing device configured to store information and instructions. When executed by the processing device, the instructions perform the operations of associating an identification number with the collaboration conference communication from the user and transmitting one or more requests for performance information from one or more conference bridges of a plurality of conference bridges associated with the network, the operational information comprising at least the available capacity for the one or more conference bridges. The instructions also perform calculating a percentage of available capacity for the one or more conference bridges and selecting one of the one or more conference bridges associated with the network for hosting the conference event based at least on the calculated percentage of available capacity.

Another implementation of the present disclosure may take the form of a method for managing collaboration conferences in a network. The method may include the operations of receiving a notice of a change of state of a first conference bridge of a plurality of conference bridges associated with a telecommunications network, the notice of a change of the first conference bridge comprising an identification of the first conference bridge and accessing a database configured to store at least one routing rule for at least one customer to the telecommunications network, the at least one routing rule comprising a priority table comprising a list of the plurality of conference bridges and a priority level associated with each of the plurality of conference bridges. In addition, the method may include removing the first conference bridge from the priority table of the at least one routing rule and selecting a second conference bridge as a host conference bridge for a new collaboration conference on the telecommunications network.

Yet another implementation of the present disclosure may take the form of a system for managing collaboration conferences in a network. The system includes a network interface unit configured to receive a communication from a communications network, an application server in communication with the network interface unit and a database connected to the application server configured to store at least one priority table comprising a list of a plurality of conference bridges associated with a telecommunications network and a priority level associated with each of the plurality of conference bridges and instructions. In addition, when the instructions are executed by the application server, the system performs the operations of receiving a notice at the network interface unit of a change of state of a first conference bridge of a plurality of conference bridges associated with a telecommunications network, the notice of a change of the first conference bridge comprising an identification of the first conference bridge. In addition, the system may also perform the operations of retrieving the priority table from the database, removing the first conference bridge from the priority table, selecting a second conference bridge as a host conference bridge in response to receiving a request for a new collaboration conference on the network interface unit and transmitting one or more routing messages to the telecommunications network, wherein the one or more routing messages include an indication of the second conference bridge.

Embodiments of the present disclosure involve systems, methods, computer program products, and the like, for collaboration conferencing with multiple participants over a communications network, and more specifically for a conferencing routing server for managing and routing collaboration participants. Collaboration conferencing as used herein comprises any type of multimedia conferencing over a network, such as audio conferencing, web or internet conferencing and multi-site video conferencing. One example of a central conferencing routing server (CCRS) is implemented and configured in the communications network to receive a request to join a collaboration conference from one or more of the participants and route the participants to a shared communication bridge that conducts the conference. Additionally, the CCRS may receive and maintain information about the communications network to intelligently route the collaboration conference to an appropriate bridge based on any number of criteria. For example, the CCRS may communicate with one or more conference bridges associated with the communications network and determine which conference bridge will host a collaboration conference request from a collaboration participant.

The CCRS may also determine which conference bridge will host a collaboration conference request based on other information. For example, the CCRS may maintain a database of information or preferences associated with the conference requester and attempt to select a conference bridge based on the requester's information. Such information may include, but is not limited to, a regional preference, the size of the collaboration request and certain collaboration features of the conference collaboration. In another example, the CCRS may receive performance information from a plurality of conference bridges that are able to conduct the collaboration conference and select a conference bridge in response to the performance information. For example, a particular bridge may provide certain additional features, such as high definition audio, and the selection of the conference bridge may be based on the desire for the additional feature or features. Also, the CCRS may be configured to respond to a failure in one of the conference bridges to allow for repair to the network and/or account for split conferences that may occur due to the bridge failure. In general, the CCRS may provide configurability in routing a collaboration conference to a conference bridge based on any number of criteria and information about the requester and the communications network on which the conference occurs.

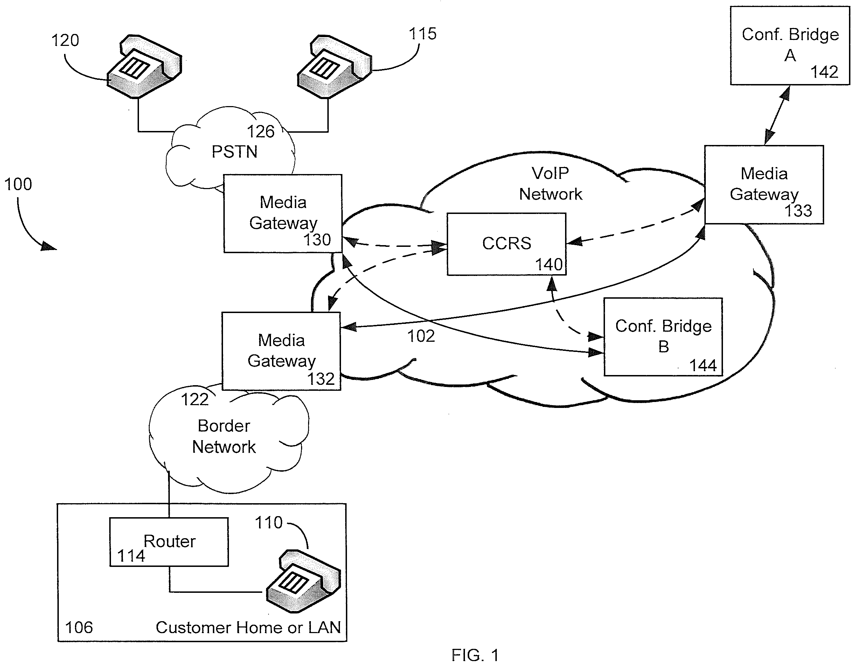

Figure 1 illustrates an exemplary operating environment 100 for hosting conference collaboration communications between multiple participants. The environment 100 provides for setting up communication sessions between network users. With specific reference to FIG. 1, the environment 100 includes a VoIP network 102, which may be provided by a wholesale network service provider. However, while the environment 100 of Figure 1 shows a configuration using the VoIP network 102, it should be appreciated that any communication network is envisioned as included in the operating environment 100. For example, network 102 may be a circuit switch communication network utilizing time division multiplexing (TDM) or plain old telephone service (POTS) switching. In general, the network 102 of Figure 1 may be any communication network known or hereafter developed. However, for ease of understanding, a VoIP network embodiment is hereafter used to describe the communications network.

The VoIP network 102 includes numerous components such as, but not limited to gateways, routers, and registrars, which enable communication across the VoIP network 102, but are not shown or described in detail here because those skilled in the art will readily understand these components. More relevant to this description is the interaction and communication between the VoIP network 102 and other entities, such as the one or more customer home or business local area networks (LANs) 106, where a participant in a conference will connect with the system for the conference.

Customer network 106 can include communication devices such as, but not limited to, a personal computer or a telephone 110 connected to a router/firewall 114. Although shown in Figure 1 as telephonic devices 110, the communication devices may include any type of communication device that receives a multimedia signal, such as an audio, video or web-based signal, and presents that signal for use by a user of the communication device. The communication and networking components of the customer network 106 enable a user at the customer network 106 to communicate via the VoIP network 102 to other communication devices, such as another customer network and/or an analog telephone 115, 120. Components of the customer network 106 are typically home- or business-based, but they can be relocated and may be designed for easy portability. For example, the communication device 110 may be wireless (e.g., cellular) telephone or portable laptop computer.

The customer network 106 typically connects to the VoIP network 102 via a border network 122, such as one provided by an Internet Service Provider (ISP). The border network 122 is typically provided and maintained by a business or organization such as a local telephone company or cable company. The border network 122 may provide network/communication-related services to their customers. In contrast, the communication device 120 accesses, and is accessed by, the VoIP network 102 via a public switched telephone network (PSTN) 126 operated by a local exchange carrier (LEC). Communication via any of the networks can be wired, wireless, or any combination thereof. Additionally, the border network 122 and PSTN 126 may communicate, in some embodiments, with the VoIP Network 102 through a media gateway device (130, 132). For ease of instruction, only three communication devices 110, 115, 120 are shown communicating with the VoIP network 102; however, numerous such devices, and other devices, may be connected with the network, which is equipped to handle enormous numbers of simultaneous calls and other communications.

In general, a request for a collaboration conference over the VoIP network 102 is initiated by a requester through one of the communication devices 110, 115, 120 associated with the network. As used herein, the term "collaboration conference" includes any type of collaboration between three or more users of a communication network. For example, the collaboration conference may include audio collaboration, video collaboration, web collaboration, a combination of any of the above, and the like. For ease of instruction, the collaboration conferences discussed herein are generally made in reference to an audio conference, although any type of collaboration conference over a telecommunications network is envisioned with respect to the present disclosure. Similarly, although Figure 1 illustrates the communication devices 110, 115, 120 as telephonic devices, the communication devices may be any type of communication device, including personal computers, cellular phones and the like.

Upon receipt of the request for a collaboration conference, the network 102 routes the request to the CCRS 140, integrated within the network 102. However, it should be appreciated that the CCRS 140 may be a part of the network 102, may be separate from the network, or may have portions deployed in the network and out of the network. In addition, the CCRS 140 may be resident on one or more components of the VoIP network 140, including several instances of the CCRS 140 integrated throughout the network 140. Further, although only a single instance of a CCRS 140 is illustrated in Figure 1, any number of CCRS instances may be present in the network 102 to form a CCRS system. As discussed in more detail below, the network 102 may account for the availability of multiple CCRS devices or instances through a process of establishing a master CCRS control engine.

To transmit the request to the network, the requester uses the communication device 110, 115, 120 to dial a conference specific telephone number. In some instances, the network, upon receipt of the dialed communication, executes an application that queries the requester to enter an access code number that the requester enters into the communication device 110, 115, 120. With this information, the network 102 determines that the requester intends to initiate or join a collaboration conference and routes the request to a conference bridge, as explained in greater detail below.

In any event, the CCRS 140 receives the request to begin a collaboration conference or join an existing conference. In response, and described in more detail below, the CCRS 140 may route the one or more requests to one of several conference bridges 142, 144 associated with the VoIP network 102 for hosting of the collaboration conference. Although only two conference bridges 142, 144 are shown in Figure 1, it should be appreciated that any number of conference bridges may be associated with the network 102 for hosting collaboration conferences.

In general, the conference bridges 142, 144 provide a hosting site for a collaboration conference between a plurality of users of the network 102. Thus, conference bridge A 142 may host a collaboration conference while conference bridge B 144 may host an additional collaboration conference. In particular, conference bridge A 142 is connected to the communications network 102 through a media gateway 133 similar to the media gateway disclosed above. This configuration may be utilized when the conference bridge 142 is a time division multiplex (TDM) bridge. Conference bridge B 144 is internal to the communications network 102 through which the communications of the conference are transmitted. This configuration is utilized for Internet Protocol (IP) based bridges.

Additionally, the CCRS 140 may be configured for use with any number of network and conference bridge platforms. For example, the telecommunications network 102 of Figure 1 may be configured as a TDM network or an IP-based network, which includes video, audio and web-based components, to which the CCRS 140 may be configured to interface. Another particular network and/or conference bridge platform supported by the network configuration 102 of Figure 1 is a Session Initiation Protocol (SIP) based network. For example, conference bridge B 144 may be a SIP-based conference bridge. Such IP-based components may provide additional conferencing features to the network by providing information concerning the collaboration conference in a header of a message transmitted through the network such as an identification of the collaboration conference, video integration, Uniform Resource Identifier (URI) based routing and conference integration, conference access credentials for authentication and permission to enter the requested conference. SIP-based conference bridges may also provide high definition audio, additional security features and transitions between collaboration conferences without having to redial into the system. In general, because components operating utilizing SIP can exchange information within a header, many additional features for a collaboration conference can be offered to participants on a SIP-based conference bridge. In addition, SIP-based CCRS devices may utilize many of the advantages of information exchange within the header when communicating with TDM-based network devices.

To connect to a collaboration conference, each participant to the conference may be routed to the same conference bridge 142, 144 for the duration of the conference. The conference bridge 142, 144, in turn, provides communication ports for each participant such that each participant can hear or otherwise participate in the collaboration conference. Any conference bridge known in the art or hereafter developed may be integrated into the system 100 of Figure 1 for hosting a collaboration conference. In addition, the term "conference bridge" or "bridge" includes any component of a communication network that provides an access point to one or more users of the network for a collaboration conference. For example, "conference bridge" may also include such devices as a media server device, a gateway server device or the like as configured within the network 102.

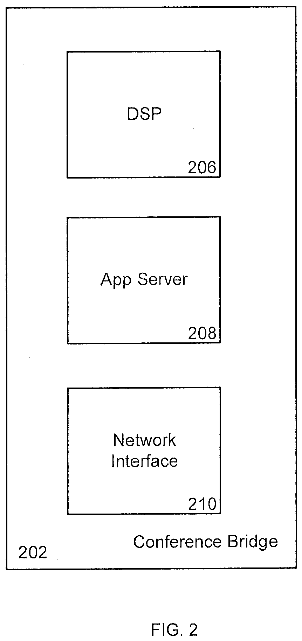

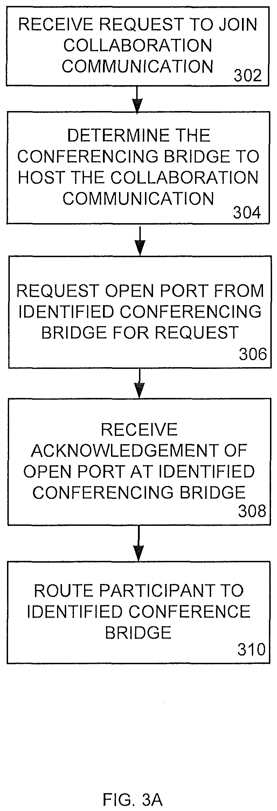

Figure 2 is a block diagram illustrating an exemplary conference bridge device that may be utilized in the network configuration 100 of Figure 1. The conference bridge 202 comprises an application server 208 and a digital signal processing (DSP) component 206. In general, the application server 208 of the conference bridge 204 communicates with one or more applications of the network to establish the collaboration conference. In addition, for SIP-based or other IP-based conference bridges, the bridge may include a network interface unit 210. In general, the application server 208 includes one or more applications that can be executed by the conference bridge 202 to perform many of the functions described herein for the conference bridge. In addition, the conference bridge 202 may include a network interface unit 210 for receiving information and/or instructions from the network 202 to route and connect a collaboration conference communication for that particular bridge. The network interface unit 210 connects to the media gateway 133 of Figure 1 or connects directly to the core of the network 100 to receive the communications of the participants and connects each participant to each other to establish the collaboration conference. The network interface unit 210 may also initiate one or more of the applications stored in the application server for execution by the conference bridge. In general, the conference bridge 202 may receive a request from the network to connect a requester with a hosted conference. The request may be received through a signaling protocol, such as through a SIP-based communication. In response, the application server 208 may provision one or more ports for connection to the requester's communication. The app server 208 may then signal to the network 102 that the ports are available, at which point the data or audio portion of the communication may be routed to an available port in the conference bridge 202. In this manner, the handshaking between the network and the conference bridge 202 may occur over the signaling plane of the IP-based protocol separate from the data or audio portion of the communication request. A more detailed description of the method through which a request is routed to a conference bridge 202 is included below with reference to Figure 3A.

Returning to Figure 1, the network 100 may be utilized by one or more participants to a collaboration or conferencing communication hosted on a conference bridge 142, 144. In particular, Figure 3A is a flowchart of a method for the CCRS of the network 102 to receive a request from one or more participants to join a collaboration session and route the participants to the proper conference bridge 142, 144 through which the collaboration is hosted. In general, the operations described in relation to the flowchart of Figure 3A are performed by one or more components of the CCRS 140 as part of the telecommunications network 102.

Beginning with operation 302, a participant to a conference communication may dial into the conference using a telephonic device 110, 115 and/or 120. In particular, the participant may dial a conference number and/or enter a conference code to access the collaboration conference. The media gateway 130, 132 or other switching device routes the request from the participant to the CCRS 140 through the network 102. In Figure 1, the request is illustrated by the dashed line between the media gateway 130, 132 and the CCRS 140. As should be appreciated, in some IP networks, the request may be routed to the CCRS 140 on a signaling plane and does not include the audio portion of the communication. The request is then received by the CCRS 140, as indicated by operation 302 of Figure 3A.

Upon receipt, the CCRS 140 determines, in operation 304, which of the available conference bridges 142, 144 associated with the network 102 that is hosting or will host the collaboration conference requested by the participant. The CCRS 140 may utilize several factors to determine which conference bridge 142, 144 hosts the collaboration conference. Such factors and operations performed by the CCRS 140 to determine the appropriate conference bridge are discussed in more detail below. In addition, the CCRS 140 may communicate with one or more of the conference bridges 142, 144 associated with the network 102 in operation 304. This communication between the CCRS 140 and the conference bridges is illustrated by the dashed lines between the CCRS and the conference bridges in Figure 1. Further, in the embodiment in which the conference bridge 142, 144 is within the network 100, the CCRS 140 would communicate directly with the conference bridge without going through the media gateway device 133.

In one embodiment, the CCRS 140 communicates particularly with the app server component 208 of the conference bridge 202 to determine the appropriate collaboration bridge and to establish the collaboration conference. The app server component 208 of the conference bridge 202 may provide any information concerning the conference bridge to the CCRS 140, including number and types of available ports, the technical capabilities of the conference bridge, current collaboration conferences being hosted by the conference bridge, and the like. In another example, the conference bridge 142 may be a SIP-based conference bridge. In this example, the CCRS 140 would communicate with the app server 208 through the network interface unit 210. The app server 208 then provisions the requested ports and notifies the CCRS 140 when such ports are available for the collaboration conference. In addition, the app server 208 provides the information of the conference bridge 142 that may be utilized by the CCRS 140 to determine which conference bridge will host the collaboration conference.

For example, a participant may utilize the telephonic device 120 or other communication device to access the network 100 and request access to a collaboration conference. The media gateway 130 associated with the communication device 120 routes the request to the CCRS 140. In response, the CCRS 140 identifies conference bridge B 144 as the conference bridge which will host or is hosting the collaboration conference. In one embodiment, the CCRS 140 communicates with conference bridge B 144 to determine availability and verify that the collaboration conference is hosted on conference bridge B.

In operation 306, the CCRS 140 requests an open communication port from the conference bridge 142 identified in operation 302. In the embodiment shown in Figure 2, the conference bridge 202 may utilize a port in the DSP component 206 of the conference bridge in response to the request sent by the CCRS 140. The open port in the DSP component 206 allows the participant to connect to the collaboration conference hosted by the conference bridge 202 and participate in the conference. In addition, the conference bridge 202 may transmit an acknowledgement to the CCRS 140 from which the request originated to indicate that the requested communication is open. Again, in IP-based networks, the request for available ports and acknowledgement may occur on a separate communication signal than the audio or video portion of the collaboration communication. Further, a SIP-based network, the request may include certain information in the header of the request, such as the master ID number and/or the number of requested ports. The request made by the CCRS 140 to the conference bridge is illustrated in Figure 1 as the dashed line from the CCRS to the media gateways associated with each conference bridge.

In operation 308, the CCRS 140 receives the acknowledgement message from the conference bridge 142. In one embodiment, the acknowledgement message contains information that identifies the open port to the CCRS 140. For example, in the SIP-based embodiment, the acknowledgment may include the IP address of the conference bridge in the header of the message. In response to receiving the acknowledgement message, the CCRS 140 routes the participant's communication to the open port in the conferencing bridge 142 in operation 310. In one embodiment, the CCRS 140 facilitates the communication to the conference bridge 142 such that the audio portion of the communication from the participant is no longer routed through the CCRS. For example, in a network 102 that utilizes Session Initiation Protocol (SIP), the CCRS 140 may issue a "SIP Refer" command to the media gateway 133 in operation 310 to route the participant communication to the conference bridge 142, effectively removing the CCRS from the communication flow. This refer message may include the IP address of the selected conference bridge in the header such that the network can route the communication to the selected conference bridge. The connection of the communication bypassing the CCRS is illustrated in Figure 1 as the solid line connecting the media gateway 133 associated with the participant's telephonic device 120 and the media gateway associated with conference bridge A 142. Thus, through the use of the method outlined in Figure 3A, the CCRS 140 may receive a request from a participant of a collaboration conference and route the participant to the proper conference bridge that hosts the specific collaboration conference. In a similar manner, collaboration conference participants may be routed to media gateway 133 and conference bridge A 142 such that multiple conferences may be occurring simultaneously through the network 102 on multiple conferencing bridges 142, 144.

As can be understood in light of the CCRS described above, utilizing a central conferencing server provides several advantages over previous conferencing systems. As mentioned, prior art conferencing systems statically connected each participant to a conferencing bridge based on the number assigned to the participant. Thus, such networks had no mechanism for adjusting the load on any one conferencing bridge based on the number of conference participants. In addition, such systems proved difficult in determining proper billing rates for the collaboration conference as each participant could be requesting access to the conference from any place on the globe, without any central mechanism for determining the location of each participant.

In contrast, the CCRS of the present disclosure provides flexibility in the routing and handling of the collaboration conferences. For example, because each participant request is directed to the CCRS, handling of the participant request is easier on the communications network as the termination point for each request is the same component of the network. In particular, by including a component of the network that is dedicated to handling all requests for a conference participation, other components in the network that were previously tasked with receiving and routing the request may be freed to handle other type of network traffic. In addition, the CCRS provides protection against unintended overloading of a conference bridge. For example, a very large company with several thousand employees may utilize the communication network for collaboration conferences. However, because collaboration conference numbers are typically directly associated to a dedicated conference bridge for that number, too many employees of a particular company attempting to initiate a collaboration conference at the same time may overload a conference bridge that is already hosting several other collaboration conferences. To prevent this, many communication networks may assign several conferencing access numbers to the very large company so that the employees are spread over several conference bridges. However, providing several conferencing access numbers to a single entity may be confusing to the employees of the very large company. In contrast, because the CCRS provides dynamic routing of the conference participants, a single conference access number may be provided to the very large company as the same conference access number may be routed to any one of the available conferencing bridges, rather than the dedicated conference bridge for the number. In this example, even if an inordinate number of employees attempt to initiate collaboration conferences at the same time, the CCRS can route the participants accordingly such that all of the collaboration conferences do not end up on the same conference bridge that may overload the bridge.

In another example, an administrator of a collaboration conference may prefer to include other types of multimedia communications to accompany the voice portion of the collaboration conference. For example, a web page may be provided to an administrator of the conference to provide presentations and/or control over the conference. The web moderator web page provides such control features as the ability to mute all participants, disconnect a particular individual participant, show the number and identification of each participant, and the like. However, such a web page may not be within the capabilities of each conference bridge. Thus, when such features are requested by a moderator of the collaboration conference, it is often advantageous to place the conference on a conference bridge that supports such features. Such routing of a conference to a conference bridge that supports the technical requirements of the collaboration conference can occur dynamically through the use of the CCRS described above. Further examples of dynamic routing advantages gained through the use of a CCRS in the telecommunications network are described below.

Also, a conferencing system that utilizes a CCRS can adapt to varying aspects of the collaboration conference. For example, the CCRS may identify that the participants to a particular collaboration conference are originating from a certain region of the world, based on the telephonic device the requester accesses the network. In this example, the CCRS can route each participant to a conference bridge that is geographically located near the region of the world of each participant to improve the reliability of the conference. Also, the CCRS may aid in the accurate billing of the conference to a customer by providing a central location in which information for each participant to a conference can be retained and retrieved by the telecommunications network. Such information may not be available to a conference bridge that just receives communications from the telecommunications network as the information may be spread over any number of devices in the network.

An additional advantage provided by the CCRS is a more robust and faster disaster recovery during failure of a conference bridge hosting a collaboration conference. In previous conferencing systems, such disaster recovery required a network administrator to reroute each participant to the conference to a new conference bridge, requiring both time and manpower to accomplish. In contrast, the CCRS as described herein may be programmed to identify a failure at a conference bridge and dynamically reroute each participant to a new conference bridge. This rerouting of the participants to a new conference bridge may occur with or without action by a network administrator such that disaster recovery occurs automatically. These advantages and more may be realized through the utilization of a CCRS in a conferencing system provided by a telecommunications network.

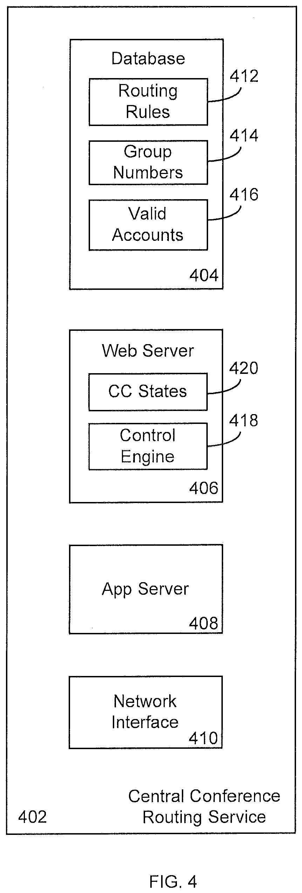

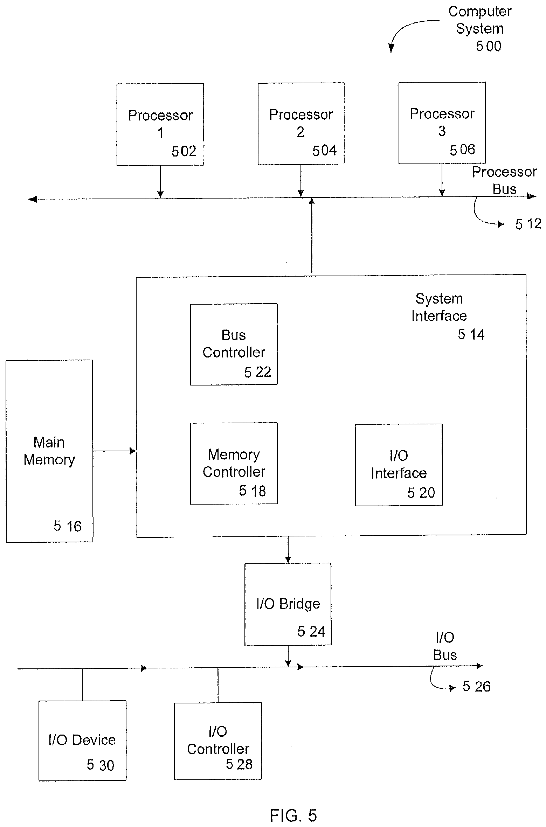

Figure 4 is a block diagram illustrating several components of a central conferencing routing server 140 that may be implemented on the network 100 of Figure 1. The components outlined may be implemented by one or more processors executing one or more computer instructions stored in a computer-readable medium. Examples of systems that may execute or implement the components are provided below with reference to Figure 5. Also, as mentioned above, the components of the CCRS may be located on any number of computing devices within the network, on any number of computing devices outside of the network, and/or a combination of both.

The CCRS 402 may include a database 404 configured to store information concerning an associated network, one or more customers or users of the network 416, identification numbers 414, and/or any other information useful by the CCRS in routing, billing, load balancing, disaster recover and the like for collaboration conferencing communications. For example, the database 404 may store identification numbers 414 for individuals or groups of users to the network who have access to a collaboration conference feature. Associated with the identification numbers may be one or more telephone numbers, access codes, communication device identifications, master identifications and routing rules associated with the users. The database 404 may also store information associated with the routing 412 and handling of collaboration conferencing, such as accepted communication devices, welcoming messages and operational rules for conducting the collaboration conference. In general, any information that may be utilized by the CCRS to route a collaboration communication and conduct the collaboration conference may be stored in one or more databases associated with the CCRS.

The CCRS also includes a web server 406 or web application that utilizes one or more applications stored in an application server 408 to execute the one or more applications. For example, the web server 406 may include one or more application programming interfaces (APIs) that execute any number of stored applications to perform the operations described herein. The web server 406 may also enable the provisioning of the databases 404 of the CCRS by the application server 408. In addition, the CCRS may include a network interface unit 410 as a proxy for receiving any type of information and/or instructions from the network 102 to route the communication. The network interface unit 410 may also initiate one or more of the applications stored in the application server or database for execution by the CCRS and/or receive a request from the telecommunications network to initiate a collaboration conference.

Through the use of the described components, the CCRS 402 provides added flexibility and features to collaboration conferencing not previously available. For example, because each collaboration conference request is routed through the CCRS or system of CCRS, routing rules may be applied to a block of related requesters identified by a master ID number or customer number, removing the need to update the routing rules for each member associated with the master ID or customer number. In addition, the database 404 of the CCRS 402 may maintain a control engine or state of a particular CCRS that determines which conference bridge a collaboration conference occurs. Thus, through the centralized nature of the CCRS 402 and the storage of customer and conference information, the CCRS provides flexibility in routing the collaboration conference requests.

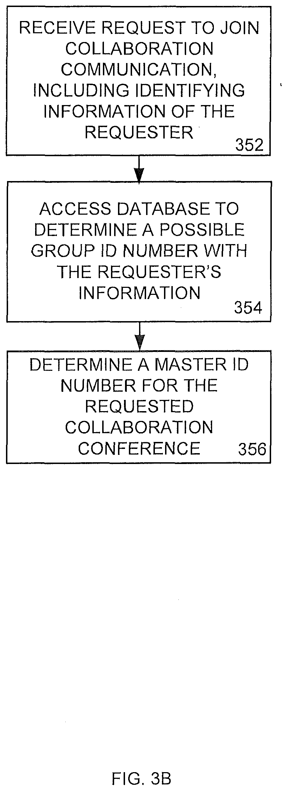

In operation, the CCRS 402 may perform the operations of the flowchart of Figure 3B. In particular, the CCRS 402 receives a request to establish a collaboration conference at the network interface 410 in operation 352. The request may include information concerning the requestor, such as requestor's telephone number and access code number. However, although the operations of Figure 3B are described in reference to the request comprising the requestor's telephone phone number and access code number, this is but one example of the information used by the CCRS to identify the requester. For example, the request may include an identification of the requester's communication device, such as a text string of the requester's personal computer. In another example, the requester's name may be used as the identifier of the requester in the request. Thus, any operation described herein utilizing the requester's telephone number and access code may be applied to other information contained in the request. For ease of instruction, however, the example of the telephone number and access code number is used.

Upon receiving the request, the application server 408, in concert with the web server 406, utilizes the requestor's telephone number and access code number to possibly determine a group ID number for the requester in operation 354. In particular, with the requester's information, the application server 408 accesses a lookup table stored in the database 404 to match the telephone number and code access number to the group ID number. In some instances, it is advantageous to associate a group ID number to a group of users of the collaboration conference system. For example, through the group ID, one or more routing rules may be applied to the entire group without the need to provide a routing rule for each individual member of the group. In some instances, the group ID number may be associated with a customer ID number such that each member associated with a customer ID number is given the same group ID number and alterations to the customer's account with the network can be applied to each group member through alterations to routing rules associated with the group ID number. Other information concerning the requester, the network and/or the collaboration conference may also be retrieved by the application server 408.

In operation 356, the application server 356 may also associate a master ID reference or number to the collaboration conference request and stores the master ID reference or number in the database 404. The master ID reference or number is utilized by the network to track the collaboration conference and the participants to the conference and may be associated with the requester's information. With the master ID number associated with the request, the application server 408 again accesses the database 404 to determine a state of the collaboration conference. In general, if the collaboration conference has been established on a conference bridge (such that the requester is a participant to the collaboration conference and not the initiator), the database 404 includes an identification of the conference bridge on which the collaboration conferencing is hosted. Alternatively, if the request is to initiate a new collaboration conference, the database includes a notification the request is a request for a new collaboration conference, at which point the application server routes the request to a master CCRS device that executes a master control engine application to determine which conference bridge will host the conference. In this manner, the components of the CCRS 402 receive the request to join or initiate a collaboration conference and route the request to the proper conference bridge.

As mentioned above, the database 402 may include a subscriber information table 414 that associates information of the requester (such as a telephone number, access code number or other identification or reference of a requestor) to a group ID number for the CCRS system. Thus, several different requester references can be associated with the same group ID number, such as a customer number. In addition, one or more routing rules 412 can be associated with a group ID number in the database 402. For example, one routing rule 412 may restrict all collaboration conferences for a particular group ID number to a particular conference bridge. This removes the need to manually change the routing rules for each individual requester for all of the members of a particular group ID number. Further, the database 404 of the CCRS 402 may be utilized by a control engine 418 of the CCRS system to store information 416 utilized by the control engine, such as associating a master ID number of a collaboration conference with an ID of the conference bridge on which the conference is hosted, the status of a collaboration conference 420, the start time of the collaboration conference, the participant count of the conference, the maximum number of participants that have attended the particular conference, and the like. In general, the database 404 may include any information concerning collaboration conferences hosted by the telecommunications network.

Figure 5 is a block diagram illustrating an example of a computing device or computer system 500 which may be used in implementing embodiments of the present invention. The computer system (system) includes one or more processors 502-506. Processors 502-506 may include one or more internal levels of cache (not shown) and a bus controller or bus interface unit to direct interaction with the processor bus 512. Processor bus 512, also known as the host bus or the front side bus, may be used to couple the processors 502-506 with the system interface 514. Processors 502-506 may also be purpose built for processing/mixing media data, such as audio or video components of a media stream, such as a digital switch processor. System interface 514 may be connected to the processor bus 512 to interface other components of the system 500 with the processor bus 512. For example, system interface 514 may include a memory controller 515 for interfacing a main memory 516 with the processor bus 512. The main memory 516 typically includes one or more memory cards and a control circuit (not shown). System interface 514 may also include an input/output (I/O) interface 520 to interface one or more I/O bridges or I/O devices with the processor bus 512. One or more I/O controllers and/or I/O devices may be connected with the I/O bus 526, such as I/O controller 528 and I/O device 550, as illustrated.

I/O device 550 may also include an input device (not shown), such as an alphanumeric input device, including alphanumeric and other keys for communicating information and/or command selections to the processors 502-506. Another type of user input device includes cursor control, such as a mouse, a trackball, or cursor direction keys for communicating direction information and command selections to the processors 502-506 and for controlling cursor movement on the display device.

System 500 may include a dynamic storage device, referred to as main memory 516, or a random access memory (RAM) or other computer-readable devices coupled to the processor bus 512 for storing information and instructions to be executed by the processors 502-506. Main memory 516 also may be used for storing temporary variables or other intermediate information during execution of instructions by the processors 502-506. System 500 may include a read only memory (ROM) and/or other static storage device coupled to the processor bus 512 for storing static information and instructions for the processors 502-506. The system set forth in Figure 5 is but one possible example of a computer system that may employ or be configured in accordance with aspects of the present disclosure.

According to one embodiment, the above techniques may be performed by computer system 500 in response to processor 504 executing one or more sequences of one or more instructions contained in main memory 516. These instructions may be read into main memory 516 from another machine-readable medium, such as a storage device. Execution of the sequences of instructions contained in main memory 516 may cause processors 502-506 to perform the process steps described herein. In alternative embodiments, circuitry may be used in place of or in combination with the software instructions. Thus, embodiments of the present disclosure may include both hardware and software components.

A machine readable medium includes any mechanism for storing information in a form (e.g., software, processing application) readable by a machine (e.g., a computer). Such media may take the form of, but is not limited to, non-volatile media and volatile media. Non-volatile media includes optical or magnetic disks. Volatile media includes dynamic memory, such as main memory 516. Common forms of machine-readable medium may include, but is not limited to, magnetic storage medium (e.g., floppy diskette); optical storage medium (e.g., CD-ROM); magneto-optical storage medium; read only memory (ROM); random access memory (RAM); erasable programmable memory (e.g., EPROM and EEPROM); flash memory; or other types of medium suitable for storing electronic instructions.

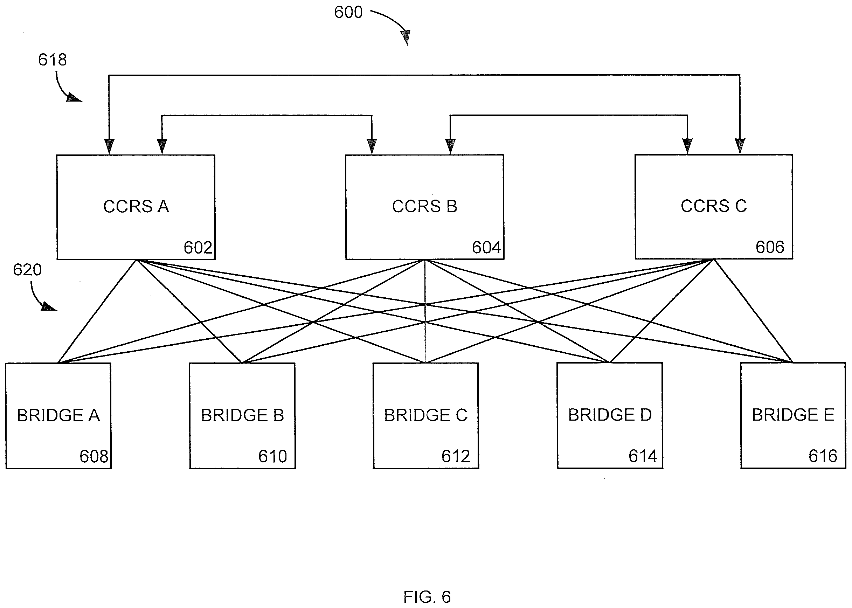

As described, by utilizing one or more of the embodiments described above, the CCRS system may route a collaboration conference communication to an appropriate conference bridge based on any number of preferences or information about the requester and/or communication network. As also mentioned above, a telecommunications network may employ a plurality of CCRS in a telecommunications network that communicate and work in concert to route the collaboration conference communications. For example, Figure 6 is a block diagram of a plurality of central conferencing routing servers connected to a plurality of conference bridges over a telecommunications network. The plurality of CCRS devices may take many forms. For example, the CCRS may be a plurality of application servers embodied on any number of telecommunication devices. In another example, the various components that comprise the plurality of CCRS in the network may be embodied on various such components. In general, the CCRS system 600 of a telecommunications network may include any number of CCRS 602-606 that operate in concert within a telecommunications network to provide the features and functionalities described herein.

The embodiment of the network 600 of Figure 6 includes three CCRS 602-606. However, any number of CCRS may be present in the network to perform the operations described herein. Also, as mentioned above, the CCRS may be in different telecommunication devices, in the same telecommunication devices, or may be spread at a component level among several telecommunication devices. As used here, however, the CCRS 602-606 are discussed as being separate CCRS devices, although any of the above described embodiments of the CCRS system are contemplated to provide the various features of the CCRS system described herein.

In one embodiment, the CCRS may be located in different geographic locations, such that CCRS A 602 may be located in Denver, CO, CCRS B 604 may be located in Minneapolis, MN and CCRS C 606 may be located in London, England, for example. In general, the CCRS 602-606 of the system 600 may be located in any geographic location the telecommunications network through which the CCRS operates is located. Further, each CCRS 602-606 of the system 600 may communicate with the other CCRS devices within the system, as shown in Figure 6 through CCRS communication lines 618. Through these CCRS communication lines 618, the CCRS 602-606 can exchange information concerning the routing and handling of the collaboration conferences. The CCRS communication lines 618 may be included as a portion of or may be separate from the telecommunications network.

In addition, each CCRS 602-606 may be connected to any number of conference bridges 608-616. The conference bridges 608-616 are similar to the conference bridges described above with relation to Figures 1 and 2. In general, the conference bridges 608-616 host collaboration conferences. Although five such conference bridges are shown in Figure 6, it is contemplated that any number of conference bridges 608-616 may be connected to the plurality of CCRS 602-606. Also, although the system 600 of Figure 6 is configured such that each CCRS 602-606 is connected to each conference bridge 608-616 through CCRS-bridge communication lines 620, the system may be configured differently such that each CCRS is connected to any number of available conference bridges, including being connected to none of the available conference bridges. As should be appreciated, the CCRS-bridge communication lines 620 may occur over a telecommunications network as described in relation to Figure 1 above.

As explained above with reference to Figures 3 and 3B, during operation the CCRS system receives a request to join or initiate a collaboration conference from a requestor. If a collaboration conference is in progress, the receiving CCRS can access its database to determine that the collaboration conference is in progress and route the request to join to the proper conference bridge that is hosting the collaboration conference. However, if the request is to establish a new collaboration conference, the CCRS system 600 can determine which conference bridge 608-616 to host to the conference. To avoid having the multiple CCRS devices determining where a particular collaboration conference is hosted, the CCRS system 600 may designate one CCRS as the master CCRS. In particular, the CCRS system 600 can designate a CCRS to execute a master control system program that is tasked by the system to determine a conference bridge 608-616 for all requests for new collaboration conferences. In one embodiment, any one of the CCRS 602-606 of the system 600 can be designated as the master control system or master CCRS. Thus, while each CCRS has the capability to operate as the master control engine for the system 600, only one CCRS executes the master control engine program at any one time. Through the master control engine program, any one of the CCRS devices 602-606 can route a request to join an existing collaboration conference once the conference is established, but only the master control engine (or master CCRS) determines the hosting conference bridge for a request for a new collaboration conference.

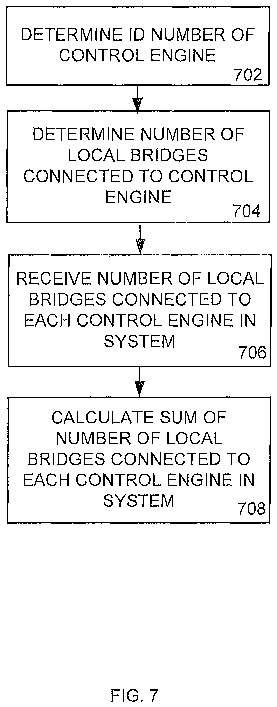

To begin the process of determining which CCRS 602-606 of the system 600 is designated as the master control engine, each CCRS 602-606 may perform the operations of the flowchart of Figure 7 to gather information about the system configuration. This gathered information may then be utilized by the system 600 to determine which CCRS 602-606 is the master CCRS tasked to determine the hosting conference bridge 608-616 for a particular request for a new collaboration conference.

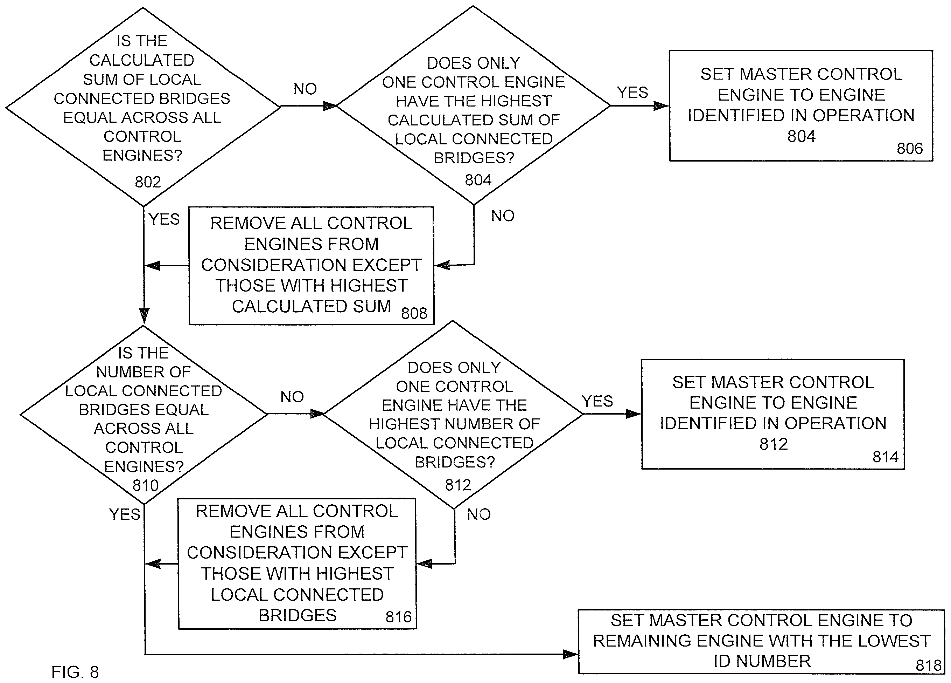

Beginning in operation 702, each CCRS 602-606 determines the identifier or ID number associated with the CCRS. In general, the telecommunications network in which the CCRS system 600 is incorporated may assign an ID number or other identifier to each CCRS 602-606 in the system. In one example, the ID number is associated with the CCRS during provisioning of the CCRS device by a network administrator or technician, such as upon installation of the CCRS into the network. Further, the ID number may be associated with CCRS 602-606 in such a manner as to provide a preference to a particular CCRS or control engine of the CCRS that is designated as the master CCRS or master control engine. The manner through which the ID number is used to determine which CCRS 602-606 is tasked as the master control engine is discussed in more detail below with reference to Figure 8.

Continuing to operation 704, each CCRS 602-606 of the system 600 determines the number of conference bridges 608-616 to which the particular CCRS is connected. For example, as shown in Figure 6, CCRS A 602 is connected to and can communicate with each of conference bridge A 608 through conference bridge E 616. Such connections between a CCRS device and a conference bridge are referred to herein as the locally connected or local conference bridges to each CCRS. Thus, CCRS A 602 determines in operation 704 that it is locally connected to five conference bridges over communication lines 620. The same operation is performed by CCRS B 604 and CCRS C 606, each determining that they are also connected to five conference bridges. The number of determined local connections provides the system with a manner to determine which CCRS device communicates with the most number of conference bridges, making the master control engine designation the most effective.

Continuing to operations 706 and 708, each CCRS 602-606 also determines the total number of conference bridges 608-616 locally connected to all of the CCRS in the system 600. In particular, each CCRS 602-606 receives the number of locally connected conference bridges determined in operation 704. To receive this information, each CCRS 602-606 in the system 600 broadcasts their locally connected conference bridges to the other CCRS devices in the system 600. Thus, continuing the example above, CCRS A 602 broadcasts over communication lines 618 to CCRS B 604 and CCRS C 606 that CCRS A is connected to five conference bridges. Similarly, CCRS B 604 broadcasts to CCRS A 602 and CCRS C 606 that CCRS B is also connected to five conference bridges and CCRS C broadcasts to CCRS A and CCRS B that CCRS C is connected to five conference bridges. In operation 706, each CCRS receives these broadcasts and stores the information in the related database for use in operation 708.

With the information received in operation 706, each CCRS 602-606 calculates the total number of conference bridges 608-616 connected to all of the CCRS in the system 600 in operation 708. Thus, because each of the CCRS 602-606 in the example of Figure 6 is connected to five conference bridges, each CCRS calculates the total number of locally connected bridges to be fifteen (15), as CCRS A 602 is connected to five conference bridges 608-616, CCRS B is also connected to five conference bridges and CCRS C is also connected to five conference bridges. This information is also stored in the database for use by the CCRS system 600.

With the information obtained through the operations of Figure 7, the CCRS system 600 can determine which CCRS is tasked as the master control engine through the method of the flowchart of Figure 8. In particular, the telecommunications network or one or more components associated with or a part of the CCRS system 600 of Figure 6 performs the operations of Figure 8 to determine which CCRS is the master control engine for determining which conference bridge 608-616 of the system hosts a collaboration conference.

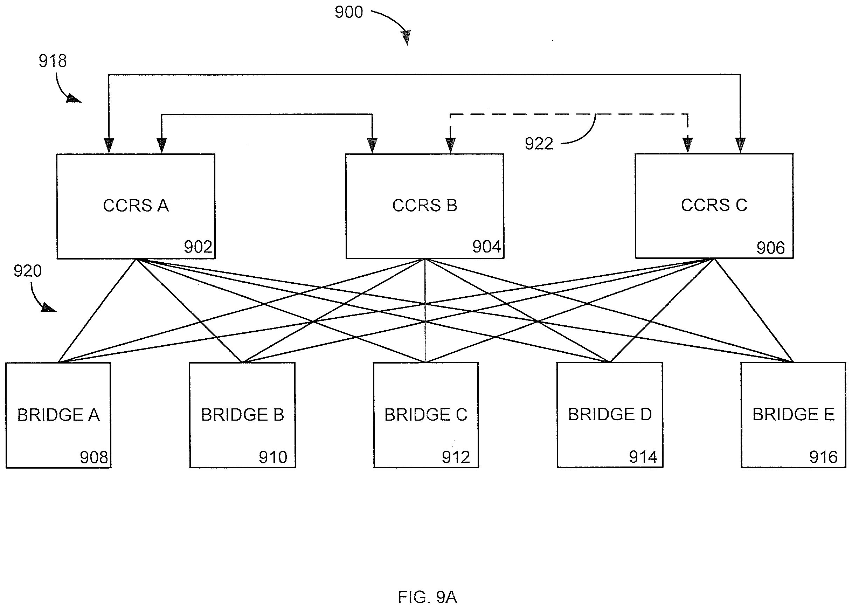

Beginning in operation 802, the CCRS system determines if the calculated sum of local bridges across all of the CCRS of the system is equal as calculated by each CCRS. This number is determined in operation 708 of the flowchart of Figure 7 discussed above. Thus, in the example given above, each of the CCRS in the system calculated a total number of 15 locally connected bridges for all of the CCRS in the system. Thus, in operation 802, the system would determine that the calculated sum of local bridges across all of the CCRS of the system is calculated equally by each of the CCRS. However, in some circumstances, at least one CCRS may calculate a different total number of locally connected bridges for each CCRS. For example, a CCRS system 900 is shown in Figure 9A that is similar to the system of Figure 6. However, in the example system 900 shown in Figure 9A, CCRS communication line 922 is faulty or malfunctioning such that CCRS C 906 cannot communicate with CCRS B 904. Thus, in this example, CCRS B 904 would not have received the broadcast from CCRS C 906 of the number of locally connected conference bridges connected to CCRS C. Thus, CCRS B 904 calculates the total number of connected bridges as ten (five bridges connected to CCRS A and five bridges connected to CCRS B). However, CCRS A 902 would continue to calculate the total number of connected bridges as 15 as it receives the broadcast from each other CCRS device. Thus, in this example, not all of the CCRS would calculate the same total of connected bridges across all of the CCRS.

If the system determines that not all of the CCRS calculated the same total number of connected bridges, the system would then determine, in operation 804, if only one of the control engines of the CCRS has the highest calculated total of connected bridges. For example, due to communication problems between the CCRS devices in the system, more than one CCRS or control engine may calculate the largest total number of conference bridges connected to all of the CCRS devices in the system. This is the case illustrated in Figure 9A where CCRS A 902 calculates 15 total bridge connections (five each from CCRS A, CCRS B 904 and CCRS C 906), while CCRS B calculates ten total bridge connections (five from CCRS A and five from CCRS B) and CCRS C similarly calculates ten total bridge connections (five from CCRS A and five from CCRS C). If only one CCRS calculates the highest number of total connected conference bridges, the system would select the CCRS that calculates the largest sum of connected bridges as seen by all CCRS devices as the master control engine to select which conference bridge hosts requests for a collaboration conference in operation 806.

Returning to operation 804, if the system determines that more than one control engine has calculated the highest sum of connected bridges, the system performs operation 808 and removes from consideration for master control engine status all control engines of CCRS except those that calculated the highest total number. For example, in a system including twenty conference bridges and three CCRS devices, several CCRS devices may calculate a total of sixty conference bridge connections, while others may calculate fewer than sixty if there is a faulty connection in the system. In this example, each of the CCRS devices that calculate the total number of connections of less than sixty is removed from consideration for master control engine status in operation 808. However, each CCRS that calculates the highest number would remain in consideration for master control engine status. Upon removal of those CCRS devices or control engines in operation 808, the system proceeds on to operation 810. Similarly, if the system determines in operation 802 that the calculated sum of connected bridges for all CCRS devices is equal, the system performs operation 808.

Operations 810-816 are similar to operations 802-808 described above. However, in these operations, the CCRS system analyzes the number of locally connected conference bridges to each CCRS device individually. Thus, in operation 810, the CCRS system determines if the number of locally connected conference bridge to each CCRS device is the same across all of the CCRS devices. In particular, referring once again to the example of Figure 6, CCRS A 602 is connected to five conference bridges 608-616, CCRS B 604 is also connected to five conference bridges and CCRS C is connected to five conference bridges. Thus, in this example, each CCRS device 602-606 is connected to the same number of conference bridges through CCRS-bridge communication lines 620. As shown in the flowchart of Figure 8, in such a case, the CCRS system would proceed to operation 818, described in more detail below.

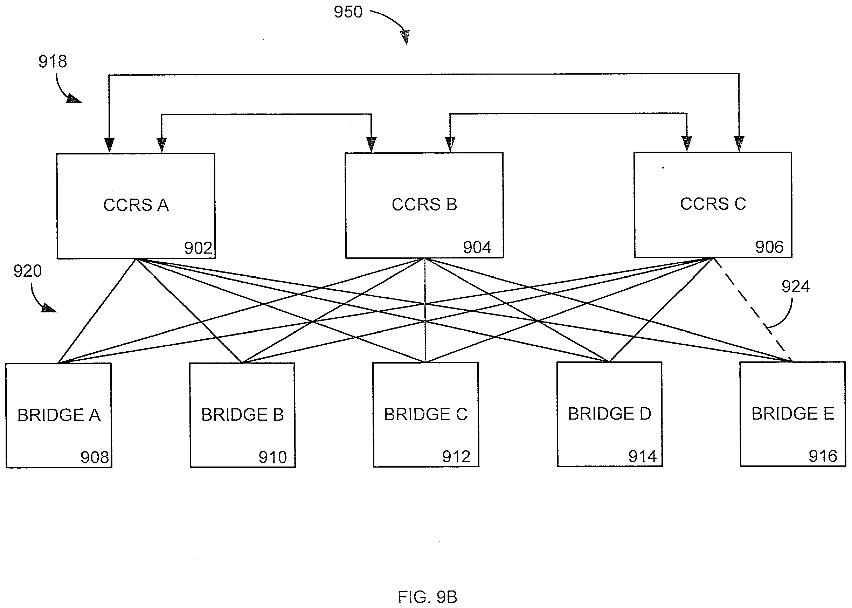

Another example is illustrated in Figure 9B, however. Figure 9B is a CCRS system 950 that is similar to the system of Figure 6. However, in the example system shown in Figure 9B, communication line 924 between CCRS C 906 and conference bridge E 916 is faulty or malfunctioning such that CCRS C cannot communicate with conference bridge E. Thus, in this example, CCRS C 906 communicates only with conference bridges A-D 608-614. As a result, the number of locally connected conference bridges for CCRS C 906 is four, while both CCRS A 602 and CCRS B 604 are locally connected to five conference bridges. Thus, returning to operation 810 of Figure 8, the CCRS system would determine that not all CCRS devices in the CCRS system have the same number of locally connected conference bridges in this example. In such cases, the CCRS system may then proceed to operation 812.

Similar to operation 804 described above, if the system determines that not all of the CCRS have the same number of locally connected bridges, the system would then determine in operation 812 if only one of the control engines of the CCRS has the highest number of locally connected bridges. For example, due to communication problems between the CCRS devices and the conference bridges, more than one CCRS or control engine may calculate a larger number of locally connected conference bridges connected to the CCRS devices in the system. This is the case illustrated in Figure 9B where CCRS A 902 and CCRS B 904 are connected to five conference bridges (conference bridges A-E 608-616), while CCRS C is connected to four conference bridges (conference bridges A-D 608-614). However, if only one CCRS device has the highest number of locally connected conference bridges connected to it, the CCRS system sets the control engine associated with that CCRS as the master control engine in operation 814. The master control engine is then tasked with determining which conference bridge hosts collaboration conference requests.

Returning to operation 812, if the system determines that more than one control engine has the highest number of locally connected bridges, the system performs operation 816 and removes from consideration for master control engine status all control engines of CCRS except those that calculated the highest number of locally connected bridges. Thus, in the example of Figure 9B, CCRS C 906 would be removed from consideration as the number of locally connected conference bridges is four and the number of locally connected bridges for CCRS A 902 and CCRS B 904 is five. Upon removal of those CCRS devices or control engines in operation 816, the system proceeds on to operation 818.

In operation 818, the CCRS system sets the master control engine as the remaining CCRS with the lowest ID number. As mentioned above, each CCRS in a CCRS system is assigned an ID number. Thus, in operation 818, the ID number is utilized by the system to select a control engine as the master control engine from the remaining CCRS. In another embodiment, the master control engine may be set as the control engine or CCRS with the highest ID number. In this manner, a selection hierarchy of the CCRS devices may be established through the ID numbers if each CCRS device includes the same number of connections to the conference bridges. The hierarchy of CCRS devices may be set through the ID numbers for any reasons related to the network. For example, the hierarchy may provide a preference to a master control engine that is geographically closer to the headquarters of the administrator of the telecommunications network. In another example, the hierarchy may provide a preference to a master control engine that is logically central to the telecommunications network to reduce transmission times through the network from the master CCRS. In general, the hierarchy may be established through the CCRS ID numbers for any reason related to the operation of the network.

In general and illustrated through the flowchart of Figure 8, the master control engine is selected based on three criteria in a particular order: 1) the calculated sum of all connected bridges seen by all of the CCRS devices; 2) the number of locally connected conference bridges for each individual CCRS devices; and 3) the ID number associated with each CCRS device. The CCRS system uses the above criteria to determine the integrity of the connections within the system and, if all connections within the system are functioning properly, the master control engine is determined through the ID number. As should be appreciated, each CCRS includes a database that stores any information needed for the above determinations, as well as one or more applications to perform the selection of the master control engine or to perform the operations of the master control engine. In addition, one or more safeguards may be implemented in the CCRS system that prevents the master control engine from bouncing between two or more CCRS devices. For example, a delay may be incorporated that delays the switching of the master control engine from one CCRS to another to prevent frequent skipping of the master control engine status and allow the master control engine selection process be stable.

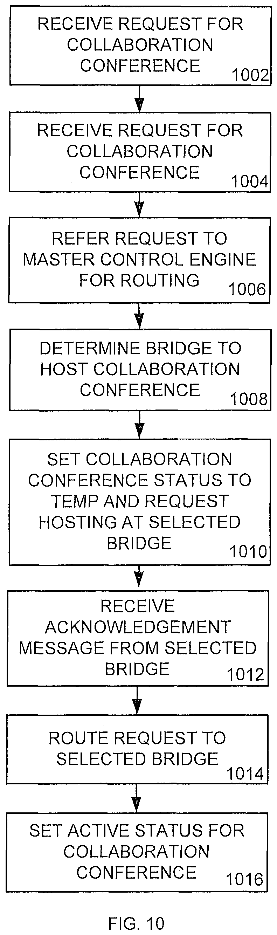

Once it is determined which of the CCRS devices is tasked as the master control engine, the CCRS system may begin routing requests for collaboration conferences to a connected conference bridge. In particular, CCRS system and/or the various components of a CCRS system may perform one or more of the operations illustrated in the flowchart of Figure 10 to connect all requests to join an existing collaboration conference or initiate a new collaboration conference on a conference bridge.

The method of Figure 10 begins in operation 1002 when a CCRS device of the CCRS system receives a request to join or initiate a collaboration conference from a requestor. In general, any CCRS device of the system may receive the request to join or initiate a collaboration conference from a requestor to the telecommunications network. Upon receipt, the CCRS may execute an application that checks the database of the CCRS to determine whether the requested conference is active in operation 1004. In addition to indicating that the collaboration conference is active, the database for the receiving CCRS may also indicate the particular conference bridge hosting the collaboration conference. In the case when a collaboration conference is active and the conference bridge is known, the receiving CCRS routes the request to join the collaboration conference to the appropriate conference bridge such that the requestor then joins the conference.

However, in some circumstances, such as when initiating a collaboration conference, the receiving CCRS checks the database and determines that the requested collaboration conference is not active. In this case, the CCRS then accesses the database to determine the identity of the CCRS device running the master control engine or otherwise acting as the master controller (which, in one embodiment, could be the same CCRS as the receiving CCRS) and, in operation 1006, routes the request to the master control engine for further processing.

In general, operations 1002 through 1006 are performed by the receiving CCRS, while operations 1008 through 1016 of Figure 10 are performed by the CCRS running the master control engine. However, in some embodiments, the receiving CCRS and the master control engine CCRS are the same device such that one CCRS performs all of the operations of Figure 10.

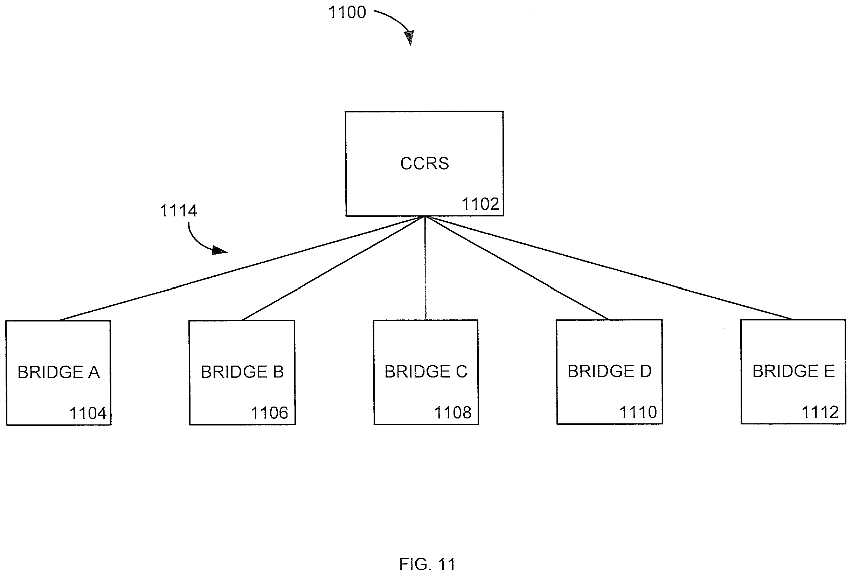

In operation 1008, the master control engine determines which bridge will host the requested collaboration conference. In general, the master control engine may use any information available or method to determine which bridge hosts a requested collaboration conference. For example, the master control engine may consult a priority table or list to determine which conference bridge will host the collaboration conference. The information or data within the priority table may be stored in the databases of the respective CCRS devices. In general, the priority list is associated to each account of the network, a customer number or other identifier of a requester, and the priority list identifies one or more conference bridges that may host a collaboration conference and a priority associated with each conference bridge. For example, the priority list for one customer may include three conference bridges ranked in order by the highest priority to the lower priority. In some embodiments, a plurality of conference bridges may be grouped into a single priority group. Upon receipt of a request for a collaboration conference, the master control engine may identify the requester, access the priority list associated with the requester and select a conference bridge based on the priority list. As discussed in more detail below, the priority of the conference bridges for any requester may be based on several criteria, including geographic location and technical features of the conference bridges. The operation of the load balancing and priority routing in relation to the CCRS is described in more detail below with reference to Figures 11 through 14.

In one example of such criteria, one or more conference bridges may be assigned a higher priority based on the geographical location of the conference bridge. For various reasons, a conference bridge located in a particular area may be preferable for hosting a collaboration conference from a particular requester. For example, a conference bridge located nearer the requester may be preferable to one located a far distance. In this situation, the priority list for that requester may be updated or created to provide priority to the conference bridge near the requester such that, upon determining which conference bridge to host the collaboration conference, the control state engine may first consider the higher prioritized bridge.

Similarly, a higher priority may be given to a conference bridge that provides additionally requested features for the collaboration conference. For example, the requester may request the conference occur in wideband audio or other features that require an IP-based conference bridge. In this situation, an IP-based conference bridge may be given a higher priority than non-IP-based conference bridges in an attempt to meet the requests of the requester. Other priority criteria may be the size or other network requirements of the conference. For example, a requester may routinely request a high volume conference such that the CCRS may associate a conference bridge that handles larger conferences (conferences with more participants) a higher priority for that particular requester. In general, however, any information or criteria may be considered when the master control engine prepares the priority list associated with a requester.

Once the conference bridge is selected by the master control engine in operation 1008, the master control engine instructs an application server of the master CCRS to transmit a request to the selected conference bridge in operation 1010. In one embodiment described above, the application server routes the conference request to a conference bridge by requesting the conference bridge for an available port on the bridge. If the conference request is a request to establish a collaboration conference, the request may be for a plurality of available ports to host the conference. The allocation of available ports associated with the conference bridge may be handled by a request from the CCRS or by a control server associated with the conference bridge. In either case, available ports of the conference bridge may be made available in response to the conference request. In other embodiments, selection of a conference bridge may be accomplished using domain name system (DNS) resolution techniques, such as round-robin selection or intelligent algorithms that account for location and/or proximity considerations (e.g., Anycast), load on the bridges, popularity or any other known policy. Such techniques may either replace or supplement the routing protocols as part of the conference bridge selection process.

Also in operation 1010, the master control engine sets the status of the collaboration conference to a temporary or "temp" status. This state is stored in the database of the CCRS device that is tasked as the master control engine. In general, a collaboration conference can be designated as having several states, including "active", "temp", "ended" and "unknown". As discussed above, an "active" state indicates that the collaboration conference is established on a conference bridge. A "temp" state indicates that a request for a collaboration conference has been received by the master control engine and the master control engine is attempting to establish the collaboration conference on a conference bridge. An "ended" state indicates that a collaboration conference has ended, but provides a small window of time to allow the conferencing system to completing the conference session. An "unknown" status is set when a collaboration conference is interrupted by a failure at the conference bridge. Although only four states are discussed herein, it should be appreciated that any number of states may be applied to a collaboration conference to aid the CCRS system in maintaining and tracking the various collaboration conferences performed through the network.

As mentioned, the master control engine sets the state of the requested collaboration conference to a "temp" state in operation 1010. While the collaboration conference is in the temp state, any additional requests to join and the original request to initiate the particular collaboration conference are held until an acknowledgement from the selected conference bridge is received. Thus, in operation 1012, the master CCRS receives an acknowledgement message from the selected conference bridge that the requested ports are available indicating that the requested ports for hosting a collaboration conference are available on the selected conference bridge.

In response, the application server of the master CCRS routes the request for the collaboration conference to the selected bridge in operation 1014. In addition, the application server can route any additional requests that may have arrived at the master control engine CCRS device while the collaboration conference was in a "temp" state. Also, in operation 1016, the master control engine sets the state of the collaboration conference to "active". This active status may also be provided to the other CCRS devices in the CCRS system so that those CCRS devices become aware of the active conference. In one embodiment, the CCRS devices receive the active status of any collaboration conference through the connection to the conference bridge hosting the conference. In another embodiment, the active status and the hosting conference bridge of the collaboration conference may be broadcast to the other CCRS devices in the CCRS system for storage in each CCRS database. Thus, when additional requests are made to join the collaboration conference, the receiving CCRS does not need to refer the request to the master control engine for routing. Rather, the receiving CCRS can check the database and determine that the requested collaboration conference is active and on which conference bridge the conference is hosted. This also relieves the master control engine to route other collaboration conferencing initialization requests.

The CCRS includes other features that may aid the network in transmitting collaboration conferences. For example, one embodiment of the CCRS may route an internet or web connection that is associated with the collaboration conference to the same conference bridge that hosts the conference to maintain continuity between the related web application and the conference. Further, the CCRS may maintain a list of technical capabilities of each conference bridge to ensure that particular technical requests are met. For example, one of the conference bridges may operate using SIP or another IP-type protocol. Such conference bridges provide additional technical features over traditional TDM based conference bridges, such as high definition audio, video and audio combination and the like. Thus, in response to a request for a collaboration conference to include particular technical features, the CCRS may route the collaboration conference to a conference bridge that supports the technical features of the conference.

As described above, the CCRS may utilize the information maintained in the database or databases of the CCRS system to perform several of the functions related to the routing of conference communications described above. For example, a request received by the CCRS to join an existing collaboration conference may be routed to the correct conference bridge by referring to the information stored by the control engines in the database. As mentioned above, the control engines maintain a status of each conference and the conference bridge on which the conference occurs. With this information, the CCRS may appropriately route any additional participants to the correct conference bridge. Such information may also aid in routing requests for a new collaboration conference to a suitable conference bridge, including based on network performance and user preferences. One example of such a CCRS system utilizing performance and preference information to route one or more requests to initiate a collaboration conference is described in more detail below.

Figure 11 is a block diagram of a central conferencing routing server connected to a plurality of conference bridges over a telecommunications network. Although illustrated in Figure 11 as a single CCRS 1102, it should be appreciated that the CCRS system 1100 may include any number of CCRS servers or devices, such as that shown in Figure 6. As shown in Figure 6, one CCRS 602 of the system 600 may be designated as the master CCRS or execute the master control engine application. In general, the master control engine application is tasked with determining which conference bridge of the available conference bridges of the system hosts a collaboration conference request. Thus, the CCRS 1102 shown in Figure 11 illustrates the master CCRS or CCRS device that executes the master control engine application. However, it is not necessary that the master control engine, or that any form of master control be involved with the system. Further, the CCRS 1102 may take many forms. For example, the CCRS may be a plurality of application servers embodied on any number of telecommunication devices. In another example, the various components that comprise the CCRS 1102 in the network may be embodied on various such network components.

In addition, the CCRS 1102 may be connected to any number of conference bridges 1104-1112. The conference bridges 1104-1116 are similar to the conference bridges described above with relation to Figures 1 and 2 such that the connections 1114 between the CCRS 1102 and the conference bridges 1104-1112 may occur over one or more telecommunications networks. In general, the conference bridges 1104-1112 host collaboration conferences. Although five such conference bridges are shown in Figure 11, it is contemplated that any number of conference bridges 1104-1112 may be connected to or otherwise associated the CCRS 1102. Also, although the system 1100 of Figure 11 is configured such that the CCRS 1102 is connected to each available conference bridge 1104-1112 through CCRS-bridge communication lines 1114, the system may be configured differently such that the CCRS is connected to any number of available conference bridges. As should be appreciated, the CCRS-bridge communication lines 1114 may occur over any number of telecommunications networks as described in relation to Figure 1 above.

In previous collaboration conference systems of telecommunications networks, the load experienced by any one conference bridge is typically not analyzed by the network prior to routing of a collaboration conference request to a conference bridge. Rather, many such conventional systems used simple methods to attempt to spread the collaboration conferences across the available conference bridge. For example, one such method included dividing a received access code from the requester by a specific number and assigning the request to a conference bridge based on the remainder value from the division. Thus, although this method attempted to balance the collaboration conferences across the conference bridges, the systems generally did not account for the number of participants to the collaboration conferences or the general load experienced by the conference bridges at any one time. In addition, the method failed to account for the potential for additional collaboration conferences and the load those additional conferences may place on the conference bridges. Rather, such load balancing was typically accomplished through a manual manipulation of the requests from a human administrator of the network.

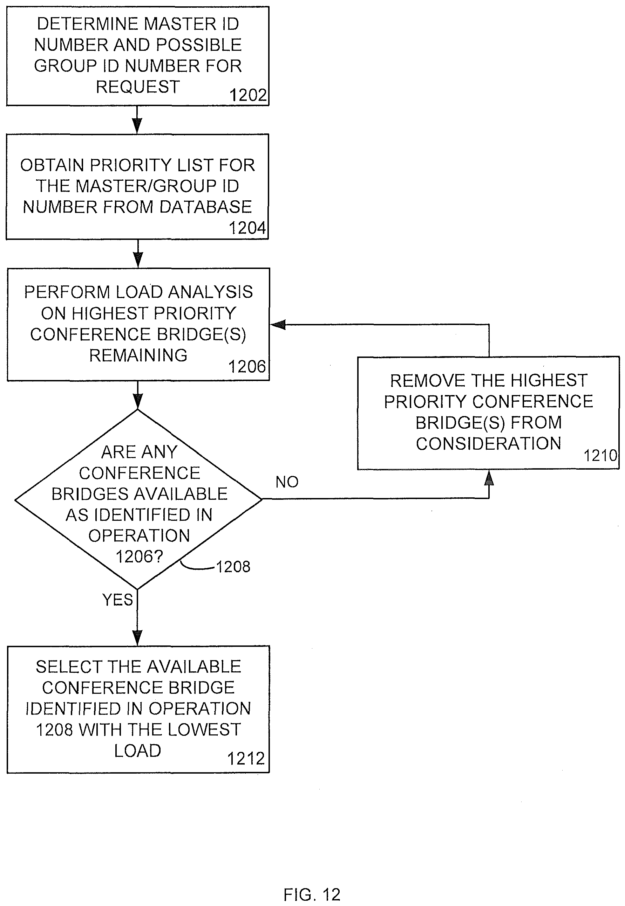

Through the use of the CCRS system 1100 illustrated in Figures 1-11, however, a load balancing or intelligent routing of collaboration conference requests can be accomplished. In particular, referring to Figure 3A, the CCRS system receives a request to join a collaboration conference in operation 302, and determines the conference bridge that will host the collaboration conference in operation 304. The flowchart of Figure 12 is one embodiment of a method to receive such a request and determine the hosting conference bridge based on performance parameters of the conference bridges. In one specific example implementation, the operations of the flowchart of Figure 12 may be performed a CCRS executing the master control engine application by collecting performance information from the conference bridges and selecting a conference bridge for hosting the collaboration conference based, at least in part, on the performance information.

Beginning in operation 1202, the CCRS determines a master identification (or "master ID") for the collaboration conference request. In particular, the request received by the CCRS 1102 from the requester may include any information to identify the requester, including a telephone number and an access code number. With this information contained in the request, the CCRS 1102 accesses a database of customer related information and determines a master ID number that is associated with the request. In one embodiment, the master ID number is related to a group ID number of the requester. In general, the master ID number aids the CCRS in identifying the collaboration conference and tracking the progress of the collaboration conference within the network. Further, as explained in more detail below, the group ID number, if one is associated with the requester, may be used as a reference to determine one or more priority tables or routing rules to apply to the collaboration conference request.

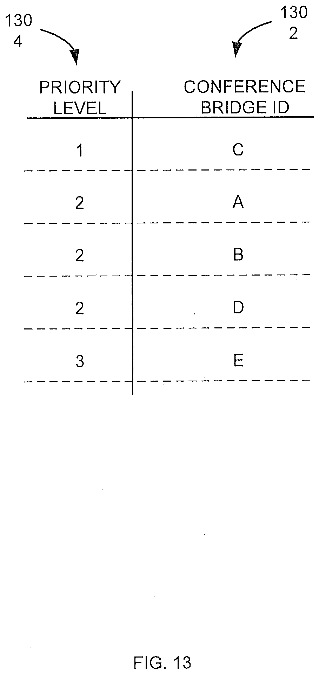

After the master ID (and possibly related number group) is determined in operation 1202, the CCRS 1102 obtains a priority list or table associated with that master ID or number group from the database. In general, the priority table includes a list of one or more of the conference bridges 1104-1112 of the network prioritized in order of preference for the particular master ID or group ID number. Figure 13 is a diagram illustrating an example of a priority table including a list of a plurality of available conference bridges for a requester to a collaboration conference based on the identifier of the requester. The entries in the priority table of Figure 13 correspond to the system 1100 shown in Figure 11. The priority table comprises a column of one or more of the available conference bridges 1302 and a column of the priority 1304 of each conference bridge for that particular master or group ID number. In the embodiment shown in Figure 13, the conference bridges 1302 are listed in descending order based on the priority. Thus, conference bridge C (corresponding to conference bridge 1108 of Figure 11) has a priority level of "1" in the table, conference bridge A, conference bridge B and conference bridge D (corresponding to conference bridges 1104, 1106 and 1110 respectively) have a priority level of "2" in the table and conference bridge E (corresponding to conference bridge 1112) has a priority level of "3" in the table.

It should be appreciated that the embodiment of the priority table of Figure 13 is but one example of a possible priority table for a master or group ID collaboration conference number. For example, although the priority table in Figure 13 includes a priority for every conference bridge 1104-1112 in the system 1100, it is not required that each conference bridge be given a priority for a particular ID number. In one particular example, the priority list may include a single conference bridge for routing of collaboration conferences for that master or group ID number. Also, the priority table may include any number of priority levels. Further, any number of conference bridges may have the same priority in the priority table. Thus, similar to the priority level "2" in the table of Figure 13, a plurality of conference bridges may have the same priority level in the priority table. For example, the priority table may include the five available conference bridges, each with a priority level of "1". Also, the priority table may be organized in any manner that is useful for retrieval from the database by the CCRS. For example, the conference bridges may be sorted in ascending order of priority level, descending order, or any other order that aids the master control engine in selecting a hosting conference bridge from the priority table.

The prioritization of the conference bridges in the priority table may be for any number of performance reasons. In one embodiment, the priority given to any conference bridge is based on the geographic location of the conference bridge. For example, a customer to the telecommunications network may request that all collaboration conferences transmitted from that customer occur on a conference bridge local to the customer. Thus, a European customer may request a high priority given to a European-based conference bridge. In another embodiment, the priority may be based on the technical features of a conference bridge. For example, a particular customer to the telecommunications network may request access to conference bridges that provide both video and audio collaboration capabilities. Such technical features may be provided by a SIP or other IP-based conference bridges. Therefore, in this example, the conference bridges in the network that provide such services may be given a higher priority than those bridges that do not provide such technical features. In another embodiment, the priority may be based on the size of the customer. More particularly, a customer with a large member size may have a conference bridge dedicated to the members of that customer such that the dedicated conference bridge is given a high priority in the priority table for members of that customer. In yet another embodiment, the priority may be based on any combination of the above factors, including geographic location and technical capabilities of the conference bridges in the network.

In the example shown in Figure 13 and Figure 11, the priority table includes three priority levels for the five conference bridges 1104-1112. The highest priority (priority "1") is given to conference bridge C 1108, perhaps because conference bridge C is geographically located nearest the requester or because conference bridge C provides technical features not available from the other conference bridges. A second priority (priority "2") is given to conference bridge A 1104, conference bridge B 1106 and conference bridge D 1108. In the priority table of Figure 13, the conference bridges with the same priority level are sorted based on an identification number of the conference bridge such that conference bridge A is listed before conference bridge B, and so on. However, similar to conference bridges of different priority levels, the sorting of conference bridges with the same priority level may take any form. A third priority (priority "3") is given to conference bridge E 1112, perhaps because conference bridge E is geographically the furthest from the requester or for some other reason related to the conference bridge and the requester of the collaboration conference.

Returning to the method of Figure 12, once the priority table for the requester is obtained, the CCRS 1102 performs a load analysis for the conference bridges with the highest priority in the priority list in operation 1206. In one embodiment, the load analysis is performed only for the conference bridges with the highest priority. In another embodiment, the load analysis for each conference bridge connected to the CCRS is performed. In yet another embodiment, the load analysis is performed at regular intervals, regardless of the priority tables stored in the database. In this embodiment, the CCRS may store the results of the load analysis in a database for use by the CCRS at any time. Thus, rather than performing the load analysis at the time a conference is requested, the CCRS may instead retrieve the latest load analysis information stored in the database for one of more of the conference bridges.

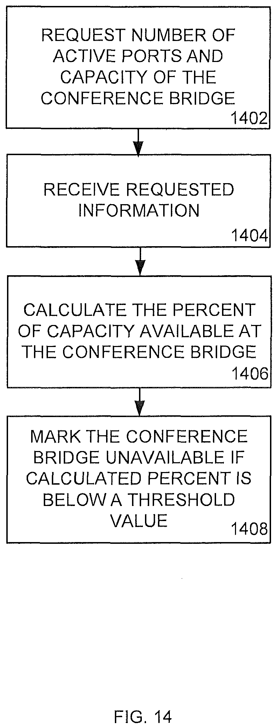

To perform the load analysis, the CCRS may perform the operations illustrated in the flowchart of Figure 14. Beginning in operation 1402, the CCRS requests certain performance information from one or more of the conference bridges. In particular, the CCRS requests the capacity of the conference bridge, such as the total number of communication ports for the bridge, and the number of currently active or reserved ports. This information is received by the CCRS in operation 1404. It should be recognized that some or all of the information may be stored and retrieved from storage, as opposed to querying the bridges themselves. Additionally, the conference bridges may be configured to auto-report the performance information to the CCRS such that operation 1402 may be omitted from the method. Regardless, performance information is obtained by the CCRS for at least one of the conference bridges of the network.

In operation 1406, the CCRS calculates a percentage of available communication ports of the conference bridge or bridges. For example, a conference bridge may transmit the capacity of the conference bridge as 900,000 ports, of which 300,000 ports are active or reserved. Thus, in this example, 33% of the ports of the conference bridge are active or reserved such that 67% of the ports of the conference bridge are available for further collaboration conferences. In this manner, based on the performance information received from the conference bridges, the CCRS calculates the percentage of communication ports that are available at the conference bridge. In some embodiments, this information can be stored in a related database for use by the CCRS, such as during load balancing outlined in Figure 11.

In operation 1408, the CCRS identifies those conference bridges that have a percentage of available communication ports that drops below a threshold value. For example, the CCRS system may be configured to identify any conference bridge that has an available capacity percentage below 10%, indicating that 90% of the communication ports of the conference bridge are in use. In general, the threshold value may be any percentage value as set by an administrator of the CCRS system, as computed by the system such as through historical use trends or otherwise. This analysis may further consider the size of a potential collaboration conference, such that a conference with several participants may be included in the analysis of available capacity to determine if the conference bridge can host the conference. Once identified as having insufficient available ports, the CCRS may mark the conference bridge as unavailable for hosting a collaboration conference, until the capacity percentage returns to within an acceptable range. Thus, the CCRS may continue to analyze or monitor unavailable conference bridges to determine when the conference bridge returns to acceptable capacity. Such analysis may be calculated in conjunction with a conference requested or independently. In addition, each CCRS device in the CCRS system may have its own threshold value such that the threshold value for one CCRS device is not necessarily the same as the threshold value of another CCRS device in the system.

Returning to operation 1206 of Figure 12, the CCRS conducts the load analysis outlined above for at least the conference bridges with the highest priority. Utilizing the example priority table of Figure 13, the CCRS performs a load analysis on conference bridge C 1108, as it is listed in the priority table for that master ID as having the highest priority. Further, assume for the sake of this example, that the load analysis indicates that conference bridge C 1108 is not available. In other words, the percent available capacity of conference bridge C 1108 is below the threshold value for the CCRS system. Thus, in operation 1208, the CCRS determines if any of the conference bridges identified in operation 1206 are available. In the example used, conference bridge C 1108 is identified, but the load analysis indicates that the bridge is unavailable. Thus, the CCRS would proceed to perform operation 1210.

In operation 1210, the CCRS removes from consideration those bridges with the highest priority. In other words, if the CCRS determines that no conference bridge with the highest priority is available to host the collaboration conference request, the CCRS moves to the next lower priority level and again determines the load availability of the conference bridge or conference bridges for the next priority level in operation 1206. Continuing the above example, as conference bridge C 1108 was deemed as unavailable due to the load condition of the bridge, the CCRS moves to the next lower priority level (in this case priority level "2") and performs the load analysis on conference bridge A 1104, conference bridge B 1106 and conference bridge D 1110, as these conference bridges all have the priority level of "2". Further, after performing the load analysis on these conference bridges, the CCRS determines if any conference bridge of the identified bridges is available in operation 1208. In some embodiments, the load analysis may be performed for every bridge in the system or on a subset of bridges such that the lack of an available bridge within a priority level results in the CCRS attempting to connect to a bridge at a lower priority level without performing a new load analysis.

If it is determined in operation 1208 that a conference bridge is available based on the load calculation for the bridge or bridges, the CCRS selects a conference bridge to host the collaboration conference in operation 1212. In some instances, the CCRS may select between several available conference bridges, such as when several conference bridges have the same priority level and are available based on the load analysis. In one embodiment of the method of Figure 12, the CCRS in this circumstance selects the conference bridge with the most available capacity of those conference bridges analyzed in operations 1206 and 1208. In another embodiment, the CCRS selects the next available conference bridge based on the conference bridge ID. In any event, the CCRS selects a conference bridge from the available conference bridges in operation 1212. In rare circumstances, each conference bridge in the customer's priority table may be full or unavailable. In this instance, the request for a collaboration conference may be denied and a recorded message may be provided to the requester indicating that all of the circuits are currently active.

With the selection of the conference bridge in operation 1212, the CCRS can return to the method of Figure 3A and connect the requester to a conference bridge for the collaboration conference. Thus, through the operations of Figures 12 and 14, the CCRS can intelligently route collaboration conferencing requests to a conference bridge based on a preference by the requester (through the priority table) and on the available capacity for the preferred conference bridge or bridges. In this manner, collaboration conferences through the telecommunications network that utilize the CCRS system can be balanced to avoid over-loading of a conference bridge, as well as provide flexibility of the network in providing the type of collaboration conference desired by the customers to the network.

In another embodiment of the CCRS system, the CCRS is configured to provide a throttling feature when selecting a conference bridge for hosting a collaboration conference. In some circumstances, a conference bridge is powered down or otherwise temporarily removed from the telecommunications network. For example, a conference bridge that has failed may require a reboot to restart the conference bridge. In another example, a new conference bridge may be added to the telecommunications network. In these circumstances, the CCRS system may be configured to add collaboration conferences to the newly added or restarted conference bridge slowly so as to not overload the conference bridge quickly. When such throttling applies, the CCRS system limits the number of ports requested of the conference bridge for particular time frames, slowly increasing the number of active ports until the conference bridge is near the level of the other conference bridges in the system. In one embodiment, a conference bridge being throttled may have a threshold value that reflects the slow accrual of active ports on the conference bridge and prevent too many active ports on the bridge at any one time. For example, a newly added conference bridge may begin with a threshold value of 50% for a particular amount of time to prevent the bridge from having more than half of the communication ports active upon starting. In another embodiment, the conference bridge being throttled may limit the number of consecutive new collaboration conference starts that occur on that particular bridge. Once the limit is reached, the throttled conference bridge is held from hosting new collaboration conferences for a set amount of time. Further, such throttling may be overridden in those circumstances where no other conference bridge is available. In other words, the throttling feature may be overridden to prevent a collaboration conference from not being connected.

As described in Figure 3A above, once the conference bridge is selected, the CCRS routes the conference request to a conference bridge by requesting the conference bridge for an available port on the bridge. If the conference request is a request to establish a collaboration conference, the request may be for a plurality of available ports to host the conference. The allocation of available ports associated with the conference bridge for hosting the conference may be handled by a request from the CCRS or by a control server associated with the conference bridge. In either case, available ports of the conference bridge may be made available in response to the conference request.

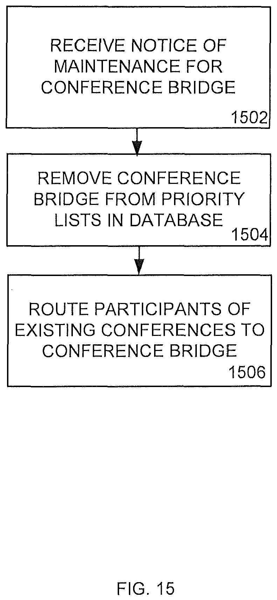

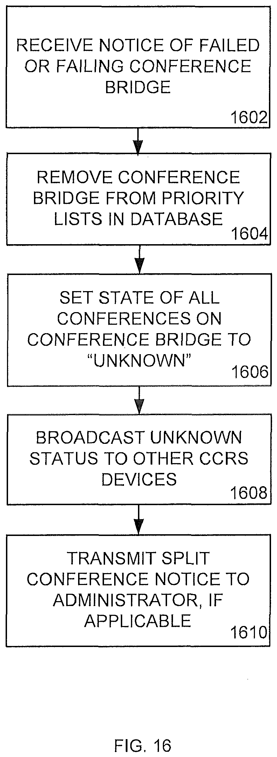

The priority lists for each master ID or group ID number stored in the database or databases of the CCRS system may also aid in situations where a conference bridge is failing or requires maintenance. In particular, the priority lists may be adjusted to account for any conference bridge which may go offline, be taken offline or partially or completely fail. Figure 15 is a flowchart of a method of the CCRS system for placing a conference bridge in a conferencing system offline. Figure 16 is a flowchart of a method for disaster recovery of a conferencing system after a failure at a conference bridge. Thus, the operations of the flowcharts of Figure 15 and Figure 16 may be performed by the CCRS system, and in particular, the master control engine or master CCRS.

In previous collaboration conferencing routing systems, an idle conference bridge is typically provided to act as a back-up conference bridge in the case of a bridge failure. Thus, when a conference bridge enters a failure state, the collaboration conferences hosted by the failed bridge are moved onto the back-up conference bridge. However, because the back-up is available at any time as the back-up bridge, it remains idle during the majority of the operation time of the collaboration conference system. As such, back-up conference bridges use up network resources, such as available power, only to provide a redundant conference bridge for failures. In contrast, by spreading out the function of the back-up conference bridge across the other conference bridges in the system, a higher communication port utilization of the conferencing system is achieved, among other advantages.

As mentioned, the CCRS system can account for conference bridges that may require maintenance during operation of the bridge. In this situation, the collaboration conferences being hosted by the conference bridge at issue may be allowed to complete, while new collaboration conferences are routed to other conference bridges in the system. One method by which the CCRS system may "dry up" the collaboration conferences on the conference bridge with a scheduled maintenance is provided for in the flowchart of Figure 15.

Beginning in operation 1502, a CCRS device (such as the master CCRS device executing the master control engine application) of the CCRS system receives a notice that maintenance is scheduled for a particular conference bridge in the CCRS system. In one example, the notice is generated by an administrator of the CCRS system or telecommunications network. In another example, the notice may be automatically generated by the network in response to monitoring the operations of the network. Further, the notice may include a scheduled time on which the maintenance is to take place, such that the operations of Figure 15 may take place prior to the scheduled maintenance.

Upon receipt of the notice, in operation 1504 the CCRS may remove the identified conference bridge from the priority lists maintained in the CCRS database. As explained above, one or more priority lists may be stored in the CCRS database that provides routing rules for the customers of the telecommunications network. Thus, the conference bridge affected by the scheduled maintenance may be included in one or more such priority lists stored in the database. In operation 1504, this bridge may be removed from the priority lists in the database.

The removal of the conference bridge from the priority lists may occur in many ways. In one example, the conference bridge is deleted from each priority list. In another example, an "unavailable" state is associated with the conference bridge in each priority list such that the unavailable bridge is not selected as the hosting conference bridge during the selection process. In any event, the instances of the conference bridge stored in the database are altered such that new collaboration conferences are no longer routed to the conference bridge scheduled for maintenance or otherwise being taken offline.

Although no new collaboration conferences are routed to the conference bridge through the removal of the conference bridge from the priority lists, the conference bridge still hosts collaboration conferences that were active on the conference bridge when the notice was received. Thus, in operation 1506, the CCRS continues to route any new participants to any existing collaboration conferences on the conference bridge. In particular, the state for the collaboration conferences on the conference bridge remains "active" such that new participants are routed to the conference bridge. However, once the conference has completed, no additional collaboration conferences are routed to the conference bridge. In this manner, the conference traffic on the conference bridge is allowed to dry up or complete prior to maintenance being performed.

In some instances, a conference bridge may fail for a variety of reasons. Further, the conference bridge may continue to operate, but the operation of the conference bridge is not ideal (such as a reduction in quality of the audio/video of the communications, slow connection speed and the like). In such cases, the CCRS may perform the operations shown in the flowchart of Figure 16.

Similar to operation 1502 of Figure 15, the CCRS receives a notice in operation 1602. However, the notice indicates that a conference bridge of the CCRS system is failing or has failed. In one example, the notice is generated by an administrator of the CCRS system or telecommunications network that is monitoring the performance of the conference bridges of the network. In another example, the notice may be automatically generated by a conference bridge that experiences degradation in performance. Further, the notice may include an identification of the conference bridge that is failing.

In operation 1604, the conference bridge is removed from the priority lists stored in the database of the CCRS. This operation is similar to operation 1504 described above with respect to Figure 15 and the removal of the conference bridge from the priority lists may occur in the same fashion as described above. By removing the conference bridge from the priority lists, the CCRS no longer routes any new requests for a collaboration conference to the failing conference bridge.

In addition to ceasing routing of new collaboration conferences to the failing conference bridge, the CCRS may also reroute any lost existing collaboration conferences on the bridge. Thus, in operation 1606, the CCRS sets the state for those collaboration conferences that are hosted by the conference bridge to "unknown". Setting the state of existing collaboration conferences to an unknown state provides a way for the CCRS to cease routing requests to join an existing conference on the conference bridge. In particular, the CCRS may be configured, using the master ID number, to check the state of an existing collaboration conference when receiving a request to join such a collaboration conference. If the CCRS determines that the state of the existing collaboration conference is unknown, the CCRS may then begin a new collaboration conference on a separate conference bridge. In another embodiment, the CCRS provides a busy signal to the requester attempting to join an existing collaboration conference on a failing conference bridge based on the stored unknown state of the conference.

Further, in some configurations, the CCRS system includes several CCRS devices that operate in accord to route the various collaboration conferences to the conference bridges. In such a configuration, the master CCRS or master control engine broadcasts the unknown state of the existing collaboration conferences on the failing bridge to the other CCRS devices in the CCRS system in operation 1608. The unknown state for these collaboration conferences is then stored in the databases associated with the CCRS devices such that each CCRS device can determine that the existing collaboration conferences may be terminated by the failing bridge. Thus, when a request to join the existing collaboration conference on the failing bridge is received, the request may be forwarded to the master control engine for routing to a functioning conference bridge.

In some instances, however, the above operations result in a split collaboration conference. In general, a split collaboration conference occurs when participants to the conference are split between two or more conference bridges. For example, a failing bridge may prevent new participants from joining an existing collaboration conference, but allows the existing collaboration conference to continue, albeit at lesser performance in some cases. In this circumstance, the new participants may be routed to a new collaboration conference on a functioning conference bridge, while the participants that have joined the collaboration conference remain on the failing bridge. Thus, in operation 1610, the CCRS transmits a split conference notice to a network administrator if a split conference arises from the failing conference bridge. The split conference notice may include information concerning the split conference, such as the number of participants on the existing conference, the conference bridge of the new collaboration conference and the start time of the new collaboration conference. The network administrator, upon receiving the notice, may take steps to correct the split conference by switching the participants on the failing conference bridge to the new collaboration conference such that the conference can continue. In another embodiment, the split conference notice is received and processed by the network automatically.

As mentioned above, the CCRS system may include a plurality of control engines executing on several CCRS devices or application servers. As such, a master CCRS device or master control engine may be set to determine which control engine routes a collaboration conference request. In one embodiment, the master control engine may be determined by connection criteria. For example, each control engine of the CCRS devices may maintain a total number of bridges that are connected to all of the control engines with which the local control engine is communicating. In this embodiment, the control engine that sees the highest total number of bridges is selected as the master control engine and handles all collaboration conference requests for the CCRS system. However, if more than one control engine sees the highest total number of bridge connections, the control engine with the highest number of local connections between the control engines with the highest total number is selected as the master control engine. If no single control engine is selected by the first two criteria, than a prioritized system ID may be employed to select the master control engine. It should be appreciated that this is but one example of a method for selecting the master control engine and any method to select a master control engine from the operating control engines may be employed. The use of a master control engine to identify the conference bridge for a new collaboration conference may aid in preventing a split conference being established on multiple bridges. Additionally, any control engine of the CCRS may act as the master control engine based on any criteria, including the example mentioned above. Some delay may be incorporated into the switching the master control engine from one engine to another to prevent bouncing from one engine to another rapidly.

Embodiments of the present disclosure include various steps, which are described in this specification. The steps may be performed by hardware components or may be embodied in machine-executable instructions, which may be used to cause a general-purpose or special-purpose processor programmed with the instructions to perform the steps. Alternatively, the steps may be performed by a combination of hardware, software and/or firmware.

The foregoing merely illustrates the principles of embodiments of the invention. Various modifications and alterations to the described embodiments will be apparent to those skilled in the art in view of the teachings herein. It will thus be appreciated that those skilled in the art will be able to devise numerous systems, arrangements and methods which, although not explicitly shown or described herein, embody the principles of the invention and are thus within the scope of the present invention as defined in the appended claims. From the above description and drawings, it will be understood by those of ordinary skill in the art that the particular embodiments shown and described are for purposes of illustrations only and are not intended to limit the scope of the present invention which is defined by the claims. References to details of particular embodiments are not intended to limit the scope of the invention which is defined by the claims.

## Claims

1. A method for routing one or more collaboration conference access requests, the method comprising operating a plurality of collaboration conferencing routing servers (140, 402) comprising a master conferencing routing server (602, 604, 606) executing a master control engine (418) and at least one non-master conferencing routing server (602, 604, 606), wherein each of the plurality of collaboration conferencing routing servers (602, 604, 606) comprises a database (404) configured to store a state of at least one initiated collaboration conferences on a telecommunications network (100) comprising the collaboration conferencing routing servers, the method comprising performing by the master control engine (418) the operations of:
receiving a collaboration conference access request from a requester's device (110);
associating an identification number with the collaboration conference access request, the identification number associated with a customer of a telecommunications network (100);
selecting a hosting conference bridge (142, 144) from a plurality of conference bridges (608, 610, 612, 614, 616), the hosting conference bridge configured to host a collaboration conference, the selection occurring in response to the collaboration conference access request and identification number;
transmitting one or more routing messages to the telecommunications network (100), wherein the one or more routing messages include an indication of the selected conference bridge (608, 610, 612, 614, 616); and
transmitting one or more conference state messages to the at least one non-master conferencing routing server, wherein the one or more conference state messages include an active state of the at least one initiated collaboration conference and an indication of the selected conference bridge (608, 610, 612, 614, 616), wherein the method comprises:
storing by at least one collaboration conferencing routing server of the plurality of collaboration conferencing routing servers (602, 604, 606) an identification number of the at least one collaboration conferencing routing server;
determining by the at least one collaboration conferencing routing server of the plurality of collaboration conferencing routing servers (602, 604, 606) a number of the plurality of conference bridges the at least one collaboration conferencing routing server is locally connected to and storing by the at least one collaboration conferencing routing server (602, 604, 606) the number of locally connected conference bridges in the at least one collaboration conferencing routing server database (404);
performing by the at least one collaboration conferencing routing server of the plurality of collaboration conferencing routing servers (602, 604, 606) the operations of:
receiving a number of locally connected conference bridges (608, 610, 612, 614, 616) from at least one other collaboration conferencing routing server of the plurality of collaboration conferencing routing servers (602, 604, 606); and
calculating a total number of locally connected conference bridges for the plurality of collaboration conferencing routing servers (602, 604, 606) and storing the total number of locally connected conference bridges (608, 610, 612, 614, 616) for the plurality of collaboration conferencing routing servers in the at least one collaboration conferencing routing server database (404);
designating by a master control engine determination module the master conferencing routing server from the plurality of collaboration conferencing routing servers (602, 604, 606); and
retrieving by the master control engine determination module the identification number of the at least one collaboration conferencing routing server (602, 604, 606), the number of the plurality of conference bridges (608, 610, 612, 614, 616) the at least one collaboration conferencing routing server is locally connected to and the total number of locally connected conference bridges (608, 610, 612, 614, 616) for the plurality of collaboration conferencing routing servers (602, 604, 606) from the database (404) of the at least one collaboration conferencing routing server.

2. The method of claim 1 for routing one or more collaboration conference access requests, wherein:
the requester's device (110) is a telephonic device;
the plurality of conference bridges (608, 610, 612, 614, 616) is associated with the telecommunications network (100).

3. The method of claim 2 wherein the selecting operation comprises:
accessing a database (404) configured to store an identifier of active collaboration conferences on the telecommunications network (100) and an identification of the conference bridge (608, 610, 612, 614, 616) on which each active collaboration conference is hosted.

4. The method of claim 2 further comprising:
requesting operational information of the plurality of conference bridges (608, 610, 612, 614, 616), the operational information comprising at least the available capacity for each of the plurality of conference bridges.

5. The method of claim 4 comprising:
executing a master control engine application (418), the master control engine application configured to analyze the operational information of the plurality of conference bridges (608, 610, 612, 614, 616) and output a selected conference bridge from the plurality of conference bridges based at least on the available capacity of each of the plurality of conference bridges.

6. The method of claim 4 wherein:
the operational information of the plurality of conference bridges (608, 610, 612, 614, 616) further comprises at least one technical feature and the master control engine application (418) is further configured to analyze the at least one technical feature of the plurality of conference bridges, preferably wherein the at least technical feature is one of wideband audio, video/audio integration and web-based conferencing.

7. The method of claim 6 wherein the plurality of conference bridges (608, 610, 612, 614, 616) are geographically disparate.

8. The method of claim 2 wherein the selecting operation comprises:
accessing a priority list of the plurality of conference bridges (608, 610, 612, 614, 616), the priority list configured to list the plurality of conference bridges in an order of preference based on the identification number.

9. The method of claim 8 wherein the preference is based at least on the geographic location of the plurality of conference bridges.

10. The method of claim 2 wherein:
the collaboration conference access request includes a web-based conference component and transmitting one or more routing messages to the network (100) includes routing information for the web-based conference component; or
the conference bridge (608, 610, 612, 614, 616) is a time division multiplexing (TDM) telecommunication device.

11. The method of claim 1 for routing one or more collaboration conference access requests, wherein:
the requester's device (110) is a communication device at a master conferencing routing server of a plurality of conferencing routing servers (602, 604, 606), wherein the a master conferencing routing server executes a master control engine application (418);
the plurality of conference bridges (608, 610, 612, 614, 616) is connected to the plurality of conferencing routing servers (602, 604, 606).

12. A telecommunications network (100) comprising:
a plurality of collaboration conferencing routing servers comprising a master conferencing routing server configured to execute a master control engine application (418) and at least one non-master conferencing routing server (602, 604, 606), wherein each of the plurality of collaboration conferencing routing servers comprises a database (404) configured to store a state of at least one initiated collaboration conferences on the telecommunications network (100); and
a plurality of conference bridges (608, 610, 612, 614, 616) configured to host a collaboration conference connected to the plurality of collaboration conferencing routing servers (602, 604, 606);
wherein the master control engine (418) is configured to perform the operations of:
receiving a collaboration conference access request from a requester to initiate a collaboration conference;
associating an identification number with the collaboration conference access request, the identification number associated with a customer of a telecommunications network (100);
selecting a hosting conference bridge from the plurality of conference bridges (608, 610, 612, 614, 616), the selection occurring in response to the collaboration conference access request and identification number; and
transmitting one or more conference state messages to the at least one non-master conferencing routing server (602, 604, 606), wherein the one or more conference state messages include an active state of the at least one initiated collaboration conference and an indication of the selected conference bridge (608, 610, 612, 614, 616),
**characterized in that**:
at least one collaboration conferencing routing server (602, 604, 606) of the plurality of collaboration conferencing routing servers is configured to store an identification number of the at least one collaboration conferencing routing server (602, 604, 606);
the at least one collaboration conferencing routing server of the plurality of collaboration conferencing routing servers (602, 604, 606) is configured to determine a number of the plurality of conference bridges (608, 610, 612, 614, 616) the at least one collaboration conferencing routing server is locally connected to and store the number of locally connected conference bridges (608, 610, 612, 614, 616) in the at least one collaboration conferencing routing server database (404);
the at least one collaboration conferencing routing server of the plurality of collaboration conferencing routing servers (602, 604, 606) is configured to perform the operations of:
receiving a number of locally connected conference bridges (608, 610, 612, 614, 616) from at least one other collaboration conferencing routing server of the plurality of collaboration conferencing routing servers (602, 604, 606); and
calculating a total number of locally connected conference bridges for the plurality of collaboration conferencing routing servers (602, 604, 606) and storing the total number of locally connected conference bridges (608, 610, 612, 614, 616) for the plurality of collaboration conferencing routing servers in the at least one collaboration conferencing routing server database (404);
the telecommunications network (100) further comprises a master control engine determination module configured to designate the master conferencing routing server from the plurality of collaboration conferencing routing servers (602, 604, 606), wherein the master control engine determination module is further configured to retrieve the identification number of the at least one collaboration conferencing routing server, the number of the plurality of conference bridges (608, 610, 612, 614, 616) the at least one collaboration conferencing routing server (602, 604, 606) is locally connected to and the total number of locally connected conference bridges (608, 610, 612, 614, 616) for the plurality of collaboration conferencing routing servers from the database (404) of the at least one collaboration conferencing routing server.

13. The telecommunications network (100) of claim 12 wherein:
the telecommunications network (100) is configured to route the collaboration conference access request to the master conferencing routing server (602, 604, 606) from the at least one non-master conferencing routing server; or
the master control engine (418) is configured to perform the operation of transmitting one or more routing messages to the telecommunications network, wherein the one or more routing messages include an indication of the selected conference bridge (608, 610, 612, 614, 616).

14. The telecommunications network (100) of claim 12 wherein the selecting operation comprises:
storing a temporary state associated with the identification number in the database (404) of the master conferencing routing server (602, 604, 606);
transmitting a request for open communication ports to the hosting conference bridge (608, 610, 612, 614, 616); and
receiving an acknowledgement message from the hosting conference bridge (608, 610, 612, 614, 616) indicating that the requested communication ports are available.

15. The telecommunications network (100) of claim 12 further comprising:
the master control engine determination module configured to designate the at least one collaboration conferencing routing server as the master conferencing routing server (602, 604, 606) based on the total number of locally connected conference bridges (608, 610, 612, 614, 616) for the plurality of collaboration conferencing routing servers (602, 604, 606); or
the master control engine determination module configured to designate the at least one collaboration conferencing routing server (602, 604, 606) as the master conferencing routing server based on the number of locally connected conference bridges (608, 610, 612, 614, 616) for the at least one collaboration conferencing routing server (602, 604, 606); or
the master control engine determination module configured to designate the at least one collaboration conferencing routing server (602, 604, 606) as the master conferencing routing server based on the identification number of the at least one collaboration conferencing routing server (602, 604, 606).

## Patentansprüche

1. Verfahren für das Routing einer oder mehrerer Kollaborationskonferenz-Zugangsanfragen, das Verfahren umfassend das Betreiben einer Vielzahl von Kollaborationskonferenz-Routing-Servern (140, 402), umfassend einen Master-Konferenz-Routing-Server (602, 604, 606), der eine Master-Steuermaschine (418) ausführt, und mindestens einen Nicht-Master-Konferenz-Routing-Server (602, 604, 606), wobei jeder der Vielzahl von Kollaborationskonferenz-Routing-Servern (602, 604, 606) eine Datenbank (404) umfasst, die konfiguriert ist, einen Zustand von mindestens einer eingeleiteten Kollaborationskonferenz auf einem Telekommunikationsnetzwerk (100) zu speichern, das die Kollaborationskonferenz-Routingserver umfasst, das Verfahren umfassend das Ausführen der folgenden Betriebsvorgänge durch die Master-Steuermaschine (418):
Empfangen einer Kollaborationskonferenz-Zugangsanfrage von der Vorrichtung eines Anfragenden (110);
Zuordnen einer Identifikationsnummer zur Kollaborationskonferenz-Zugangsanfrage, wobei die Identifikationsnummer mit einem Kunden eines Telekommunikationsnetzwerks (100) verbunden ist;
Auswählen einer hostenden Konferenzbrücke (142, 144) von einer Vielzahl von Konferenzbrücken (608, 610, 612, 614, 616), wobei die hostende Konferenzbrücke konfiguriert ist, eine Kollaborationskonferenz zu hosten, wobei die Auswahl in Reaktion auf die Kollaborationskonferenz-Zugangsanfrage und die Identifikationsnummer auftritt;
Übertragen einer oder mehrerer Routing-Nachrichten an das Telekommunikationsnetzwerk (100), wobei die einen oder mehreren Nachrichten einen Hinweis auf die ausgewählte Konferenzbrücke (608, 610, 612, 614, 616) umfassen; und
Übertragen einer oder mehrerer Konferenzzustandsnachrichten an den mindestens einen Nicht-Master-Konferenz-Routing-Server, wobei die einen oder mehreren Konferenzzustandsnachrichten einen aktiven Zustand der mindestens einen eingeleiteten Kollaborationskonferenz und einen Hinweis auf die ausgewählte Konferenzbrücke (608, 610, 612, 614, 616) umfassen, wobei das Verfahren Folgendes umfasst:
Speichern durch mindestens einen Kollaborationskonferenz-Routing-Server der Vielzahl von Kollaborationskonferenz-Routing-Servern (602, 604, 606) einer Identifikationsnummer des mindestens einen Kollaborationskonferenz-Routing-Servers;
Bestimmen durch den mindestens einen Kollaborationskonferenz-Routing-Server der Vielzahl von Kollaborationskonferenz-Routing-Servern (602, 604, 606) einer Anzahl der Vielzahl von Konferenzbrücken, mit denen der mindestens eine Kollaborationskonferenz-Routing-Server lokal verbunden ist, und Speichern durch den mindestens einen Kollaborationskonferenz-Routing-Server (602, 604, 606) der Anzahl lokal verbundener Konferenzbrücken in der mindestens einen Kollaborationskonferenz-Routing-Server-Datenbank (404);
Durchführen durch den mindestens einen Kollaborationskonferenz-Routing-Server der Vielzahl von Kollaborationskonferenz-Routing-Servern (602, 604, 606) der folgenden Betriebsvorgänge:
Empfangen einer Anzahl lokal verbundener Konferenzbrücken (608, 610, 612, 614, 616) von mindestens einem anderen Kollaborationskonferenz-Routing-Server der Vielzahl von Kollaborationskonferenz-Routing-Servern (602, 604, 606); und
Berechnen einer Gesamtanzahl lokal verbundener Konferenzbrücken für die Vielzahl von Kollaborationskonferenz-Routing-Servern (602, 604, 606) und Speichern der Gesamtanzahl lokal verbundener Konferenzbrücken (608, 610, 612, 614, 616) für die Vielzahl von Kollaborationskonferenz-Routing-Servern in der mindestens einen Kollaborationskonferenz-Routing-Server-Datenbank (404);
Zuordnen durch ein Master-Steuermaschinenbestimmungsmodul des Master-Konferenz-Routing-Servers von der Vielzahl von Kollaborationskonferenz-Routing-Servern (602, 604, 606); und
Abfragen durch das Master-Steuermaschinenbestimmungsmodul der Identifikationsnummer des mindestens einen Kollaborationskonferenz-Routing-Servers (602, 604, 606), der Anzahl der Vielzahl von Konferenzbrücken (608, 610, 612, 614, 616), mit denen der mindestens eine Kollaborationskonferenz-Routing-Server lokal verbunden ist, und der Gesamtanzahl lokal verbundener Konferenzbrücken (608, 610, 612, 614, 616) für die Vielzahl von Kollaborationskonferenz-Routing-Servern (602, 604, 606) von der Datenbank (404) des mindestens einen Kollaborationskonferenz-Routing-Servers.

2. Verfahren nach Anspruch 1 für das Routing einer oder mehrerer Kollaborationskonferenz-Zugangsanfragen, wobei:
die Vorrichtung des Anfragenden (110) eine Fernsprecheinrichtung ist;
die Vielzahl von Konferenzbrücken (608, 610, 612, 614, 616) mit dem Telekommunikationsnetzwerk (100) verbunden ist.

3. Verfahren nach Anspruch 2, wobei das Auswahlverfahren Folgendes umfasst:
Zugreifen auf eine Datenbank (404), die konfiguriert ist, eine Kennung aktiver Kollaborationskonferenzen auf dem Telekommunikationsnetzwerk (100) und eine Identifikation der Konferenzbrücke (608, 610, 612, 614, 616), auf der jede aktive Kollaborationskonferenz gehostet wird, zu speichern.

4. Verfahren nach Anspruch 2, ferner umfassend:
Anfordern von Betriebsinformationen über die Vielzahl von Konferenzbrücken (608, 610, 612, 614, 616), wobei die Betriebsinformationen zumindest die verfügbare Kapazität für jede der Vielzahl von Konferenzbrücken umfassen.

5. Verfahren nach Anspruch 4, umfassend:
Ausführen eine Master-Steuermaschinen-Anwendung (418), wobei die Master-Steuermaschinen-Anwendung konfiguriert ist, die Betriebsinformationen über die Vielzahl von Konferenzbrücken (608, 610, 612, 614, 616) zu analysieren und eine ausgewählte Konferenzbrücke von der Vielzahl von Konferenzbrücken beruhend zumindest auf der verfügbaren Kapazität jeder der Vielzahl von Konferenzbrücken auszugeben.

6. Verfahren nach Anspruch 4, wobei:
die Betriebsinformationen über die Vielzahl von Konferenzbrücken (608, 610, 612, 614, 616) ferner mindestens eine technische Eigenschaft umfassen und die Master-Steuermaschinen-Anwendung (418) ferner konfiguriert ist, die mindestens eine technische Eigenschaft der Vielzahl von Konferenzbrücken zu analysieren, wobei vorzugsweise die mindestens eine technische Eigenschaft eine von Breitband-Audio-, Video-/Audio-Integration- und Web-basierter Konferenzschaltung ist.

7. Verfahren nach Anspruch 6, wobei die Vielzahl von Konferenzbrücken (608, 610, 612, 614, 616) geographisch verschieden ist.

8. Verfahren nach Anspruch 2, wobei der Auswahlbetrieb Folgendes umfasst:
Zugreifen auf eine Prioritätsliste der Vielzahl von Konferenzbrücken (608, 610, 612, 614, 616), wobei die Prioritätsliste konfiguriert ist, die Vielzahl von Konferenzbrücken in einer Reihenfolge der Präferenz beruhend auf der Identifikationsnummer aufzulisten.

9. Verfahren nach Anspruch 8, wobei die Präferenz zumindest auf dem geographischen Ort der Vielzahl von Konferenzbrücken beruht.

10. Verfahren nach Anspruch 2, wobei:
die Kollaborationskonferenz-Zugangsanfrage eine Web-basierte Konferenzkomponente umfasst und das Übertragen einer oder mehrerer Routing-Nachrichten an das Netzwerk (100) Routing-Informationen für die Web-basierte Konferenzkomponente umfasst; oder
die Konferenzbrücke (608, 610, 612, 614, 616) eine Zeitmultiplex (TDM)-Telekommunikationsvorrichtung ist.

11. Verfahren nach Anspruch 1 für das Routing einer oder mehrerer Kollaborationskonferenz-Zugangsanfragen, wobei:
die Vorrichtung eines Anfragenden (110) eine Kommunikationsvorrichtung an einem Master-Konferenz-Routing-Server einer Vielzahl von Konferenz-Routing-Servern (602, 604, 606) ist, wobei der Master-Konferenz-Routing-Server eine Master-Steuermaschinen-Anwendung (418) ausführt;
die Vielzahl von Konferenzbrücken (608, 610, 612, 614, 616) mit der Vielzahl von Konferenz-Routing-Servern (602, 604, 606) verbunden ist.

12. Telekommunikationsnetzwerk (100), umfassend:
eine Vielzahl von Kollaborationskonferenz-Routing-Servern, umfassend einen Master-Konferenz-Routing-Server, der konfiguriert ist, eine Master-Steuermaschinen-Anwendung (418) auszuführen, und mindestens einen Nicht-Master-Konferenz-Routing-Server (602, 604, 606), wobei jeder der Vielzahl von Kollaborationskonferenz-Routing-Server eine Datenbank (404) umfasst, die konfiguriert ist, einen Zustand von zumindest einer eingeleiteten Kollaborationskonferenz auf dem Telekommunikationsnetzwerk (100) zu speichern; und
eine Vielzahl von Konferenzbrücken (608, 610, 612, 614, 616), die konfiguriert sind, eine Kollaborationskonferenz in Verbindung mit der Vielzahl von Kollaborationskonferenz-Routing-Servern (602, 604, 606) zu hosten;
wobei die Master-Steuermaschine (418) konfiguriert ist, die folgenden Betriebsvorgänge auszuführen:
Empfangen einer Kollaborationskonferenz-Zugangsanfrage von einem Anfragenden zum Einleiten einer Kollaborationskonferenz;
Zuordnen einer Identifikationsnummer zur Kollaborationskonferenz-Zugangsanfrage, wobei die Identifikationsnummer mit einem Kunden eines Telekommunikationsnetzwerks (100) verbunden ist;
Auswählen einer hostenden Konferenzbrücke von der Vielzahl von Konferenzbrücken (608, 610, 612, 614, 616), wobei die Auswahl in Reaktion auf die Kollaborationskonferenz-Zugangsanfrage und die Identifikationsnummer auftritt; und
Übertragen einer oder mehrerer Konferenzzustandsnachrichten an den mindestens einen Konferenz-Routing-Server (602, 604, 606), wobei die einen oder mehreren Konferenzzustandsnachrichten einen aktiven Zustand der mindestens einen eingeleiteten Kollaborationskonferenz und einen Hinweis auf die ausgewählte Konferenzbrücke (608, 610, 612, 614, 616) umfassen,
**dadurch gekennzeichnet, dass**
mindestens ein Kollaborationskonferenz-Routing-Server (602, 604, 606) der Vielzahl von Kollaborationskonferenz-Routing-Servern konfiguriert ist, eine Identifikationsnummer des mindestens einen Kollaborationskonferenz-Routing-Servers (602, 604, 606) zu speichern;
der mindestens eine Kollaborationskonferenz-Routing-Server der Vielzahl von Kollaborationskonferenz-Routing-Servern (602, 604, 606) konfiguriert ist, eine Anzahl der Vielzahl von Konferenzbrücken (608, 610, 612, 614, 616) zu bestimmen, mit denen der mindestens eine Kollaborationskonferenz-Routing-Server lokal verbunden ist, und die Anzahl von lokal verbundenen Konferenzbrücken (608, 610, 612, 614, 616) in der mindestens einen Kollaborationskonferenz-Routing-Server-Datenbank (404) zu speichern;
der mindestens eine Kollaborationskonferenz-Routing-Server der Vielzahl von Kollaborationskonferenz-Routing-Servern (602, 604, 606) konfiguriert ist, die folgenden Betriebsvorgänge auszuführen:
Empfangen einer Anzahl lokal verbundener Konferenzbrücken (608, 610, 612, 614, 616) von mindestens einem anderen Kollaborationskonferenz-Routing-Server der Vielzahl von Kollaborationskonferenz-Routing-Servern (602, 604, 606); und
Berechnen einer Gesamtanzahl lokal verbundener Konferenzbrücken für die Vielzahl von Kollaborationskonferenz-Routing-Servern (602, 604, 606) und Speichern der Gesamtanzahl lokal verbundener Konferenzbrücken (608, 610, 612, 614, 616) für die Vielzahl von Kollaborationskonferenz-Routing-Servern in der mindestens einen Kollaborationskonferenz-Routing-Server-Datenbank (404);
wobei das Telekommunikationsnetzwerk (100) ferner ein Master-Steuermaschinenbestimmungsmodul umfasst, das konfiguriert ist, den Master-Konferenz-Routing-Server von der Vielzahl von Kollaborationskonferenz-Routing-Servern (602, 604, 606) zuzuordnen, wobei das Master-Steuermaschinenbestimmungsmodul ferner konfiguriert ist, die Identifikationsnummer des mindestens einen Kollaborationskonferenz-Routing-Servers, die Anzahl der Vielzahl von Konferenzbrücken (608, 610, 612, 614, 616), mit denen der mindestens eine Kollaborationskonferenz-Routing-Server (602, 604, 606) lokal verbunden ist, und die Gesamtanzahl lokal verbundener Konferenzbrücken (608, 610, 612, 614, 616) für die Vielzahl von Kollaborationskonferenz-Routing-Servern von der Datenbank (404) des mindestens einen Kollaborationskonferenz-Routing-Servers abzurufen.

13. Telekommunikationsnetzwerk (100) nach Anspruch 12, wobei:
das Telekommunikationsnetzwerk (100) konfiguriert ist, die Kollaborationskonferenz-Zugangsanfrage zum Master-Konferenz-Routing-Server (602, 604, 606) vom mindestens einen Nicht-Master-Konferenz-Routing-Server zu routen; oder
die Master-Steuermaschine (418) konfiguriert ist, den Vorgang des Übertragens einer oder mehrerer Routing-Nachrichten an das Telekommunikationsnetzwerk auszuführen, wobei die einen oder mehreren Routing-Nachrichten einen Hinweis auf die ausgewählte Konferenzbrücke (608, 610, 612, 614, 616) umfassen.

14. Telekommunikationsnetzwerk (100) nach Anspruch 12, wobei das Auswahlverfahren Folgendes umfasst:
Speichern eines vorübergehenden Zustands in Verbindung mit der Identifikationsnummer in der Datenbank (404) des Master-Konferenz-Routing-Servers (602, 604, 606);
Übertragen einer Anfrage für offene Kommunikationsports an die hostende Konferenzbrücke (608, 610, 612, 614, 616); und
Empfangen einer Bestätigungsnachricht von der hostenden Konferenzbrücke (608, 610, 612, 614, 616), die anzeigt, dass die angeforderten Kommunikationsports verfügbar sind.

15. Telekommunikationsnetzwerk (100) nach Anspruch 12, ferner umfassend:
das Master-Steuermaschinenbestimmungsmodul, konfiguriert, den mindestens einen Kollaborationskonferenz-Routing-Server als den Master-Konferenz-Routing-Server (602, 604, 606) beruhend auf der Gesamtanzahl lokal verbundener Konferenzbrücken (608, 610, 612, 614, 616) für die Vielzahl von Kollaborationskonferenz-Routing-Servern (602, 604, 606) zuzuordnen; oder
das Master-Steuermaschinenbestimmungsmodul, konfiguriert, den mindestens einen Kollaborationskonferenz-Routing-Server (602, 604, 606) als den Master-Konferenz-Routing-Server beruhend auf der Anzahl lokal verbundener Konferenzbrücken (608, 610, 612, 614, 616) für den mindestens einen Kollaborationskonferenz-Routing-Server (602, 604, 606) zuzuordnen; oder
das Master-Steuermaschinenbestimmungsmodul, konfiguriert, den mindestens einen Kollaborationskonferenz-Routing-Server (602, 604, 606) als den Master-Konferenz-Routing-Server beruhend auf der Identifikationsnummer des mindestens einen Kollaborationskonferenz-Routing-Servers (602, 604, 606) zuzuordnen.

## Revendications

1. Procédé de routage d'une ou plusieurs demandes d'accès à une conférence collaborative, le procédé comprenant l'exploitation d'une pluralité de serveurs de routage de conférence collaborative (140, 402) comprenant un serveur de routage de conférence maître (602, 604, 606) exécutant un moteur de commande maître (418) et au moins un serveur de routage de conférence non-maître (602, 604, 606), dans lequel chacun de la pluralité de serveurs de routage de conférence collaborative (602, 604, 606) comprend une base de données (404) configurée pour stocker un état d'au moins une conférence collaborative initiée sur un réseau de télécommunications (100) comprenant les serveurs de routage de conférence collaborative, le procédé comprenant également l'exécution par le moteur de commande maître (418) des opérations consistant à :
recevoir une demande d'accès à une conférence collaborative provenant d'un dispositif de demandeur (110) ;
associer un numéro d'identification à la demande d'accès à une conférence collaborative, le numéro d'identification étant associé à un client d'un réseau de télécommunications (100) ;
sélectionner un pont de conférence d'hébergement (142, 144) parmi une pluralité de ponts de conférence (608, 610, 612, 614, 616), le pont de conférence d'hébergement étant configuré pour héberger une conférence collaborative, la sélection étant effectuée en réponse à la demande d'accès à une conférence collaborative et au numéro d'identification ;
transmettre un ou plusieurs messages de routage au réseau de télécommunications (100), dans lesquels lesdits un ou plusieurs messages de routage contiennent une indication du pont de conférence sélectionné (608, 610, 612, 614, 616) ; et
transmettre un ou plusieurs messages d'état de conférence audit au moins un serveur de routage de conférence non-maître, dans lequel lesdits un ou plusieurs messages d'état de conférence comprennent un état actif de ladite au moins une conférence collaborative initiée et une indication du pont de conférence sélectionné (608, 610, 612, 614,616),
dans lequel le procédé comprend :
le stockage, par au moins un serveur de routage de conférence collaborative parmi la pluralité de serveurs de routage de conférence collaborative (602, 604, 606), d'un numéro d'identification dudit au moins un serveur de routage de conférence collaborative ;
la détermination, par ledit au moins un serveur de routage de conférence collaborative parmi la pluralité de serveurs de routage de conférence collaborative (602, 604, 606), d'un nombre de ponts de conférence parmi la pluralité de ponts de conférence auxquels ledit au moins un serveur de routage de conférence collaborative est connecté localement et le stockage, par l'au moins un service de routage de conférence collaborative (602, 604, 606), du nombre de ponts de conférence connectés localement dans ladite au moins une base de données de serveur de routage de conférence collaborative (404) ;
l'exécution, par ledit au moins un serveur de routage de conférence collaborative parmi la pluralité de serveurs de routage de conférence collaborative (602, 604, 606), des opérations consistant à :
recevoir un nombre de ponts de conférence connectés localement (608, 610, 612, 614, 616) à partir d'au moins un autre serveur de routage de conférence collaborative parmi la pluralité de serveurs de routage de conférence collaborative (602, 604, 606) ; et
calculer un nombre total de ponts de conférence connectés localement pour la pluralité de serveurs de routage de conférence collaborative (602, 604, 606) et stocker le nombre total de ponts de conférence connectés localement (608, 610, 612, 614, 616) pour la pluralité de serveurs de routage de conférence collaborative dans ladite au moins une base de données de serveur de routage de conférence collaborative (404) ;
la désignation, par un module de détermination de moteur de commande maître, du serveur de routage de conférence maître parmi la pluralité de serveurs de routage de conférence collaborative (602, 604, 606) ; et
la récupération, par le module de détermination de moteur de commande maître, du numéro d'identification dudit au moins un serveur de routage de conférence collaborative (602, 604, 606), du nombre de ponts de conférence parmi la pluralité de ponts de conférence (608, 610, 612, 614, 616) auxquels ledit au moins un serveur de routage de conférence collaborative est connecté localement, et du nombre total de ponts de conférence connectés localement (608, 610, 612, 614, 616) pour la pluralité de serveurs de routage de conférence collaborative (602, 604, 606) à partir de la base de données (404) dudit au moins un serveur de routage de conférence collaborative.

2. Procédé de routage d'une ou plusieurs demandes d'accès à une conférence collaborative selon la revendication 1, dans lequel :
le dispositif du demandeur (110) est un dispositif téléphonique ; et
la pluralité de ponts de conférence (608, 610, 612, 614, 616) est associée au réseau de télécommunications (100).

3. Procédé selon la revendication 2, dans lequel l'opération de sélection comprend l'étape consistant à :
accéder à une base de données (404) configurée pour stocker un identifiant de conférences collaboratives actives sur le réseau de télécommunications (100) et une identification du pont de conférence (608, 610, 612, 614, 616) sur lequel chaque conférence collaborative active est hébergée.

4. Procédé selon la revendication 2, comprenant en outre l'étape consistant à :
demander des informations opérationnelles relatives à la pluralité de ponts de conférence (608, 610, 612, 614, 616), les informations opérationnelles comprenant au moins la capacité disponible pour chacun de la pluralité de ponts de conférence.

5. Procédé selon la revendication 4, comprenant l'étape consistant à :
exécuter une application de moteur de commande maître (418), l'application de moteur de commande maître étant configurée pour analyser les informations opérationnelles relatives à la pluralité de ponts de conférence (608, 610, 612, 614, 616) et sortir un pont de conférence sélectionné parmi la pluralité de ponts de conférence sur la base au moins de la capacité disponible de chacun de la pluralité de ponts de conférence.

6. Procédé selon la revendication 4, dans lequel :
les informations opérationnelles relatives à la pluralité de ponts de conférence (608, 610, 612, 614, 616) comprennent en outre au moins une caractéristique technique et l'application de moteur de commande maître (418) est en outre configurée pour analyser ladite au moins une caractéristique technique de la pluralité de ponts de conférence, dans lequel ladite au moins une caractéristique technique est de préférence une caractéristique parmi une conférence audio à bande large, une conférence à intégration audio/vidéo et une conférence basée sur le Web.

7. Procédé selon la revendication 6, dans lequel la pluralité de ponts de conférence (608, 610, 612, 614, 616) est géographiquement dispersée.

8. Procédé selon la revendication 2, dans lequel l'opération de sélection comprend l'étape consistant à :
accéder à une liste de priorités de la pluralité de ponts de conférence (608, 610, 612, 614, 616), la liste de priorités étant configurée pour lister la pluralité de ponts de conférence par ordre de préférence sur la base du numéro d'identification.

9. Procédé selon la revendication 8, dans lequel la préférence est basée au moins sur la localisation géographique de la pluralité de ponts de conférence.

10. Procédé selon la revendication 2, dans lequel :
la demande d'accès à une conférence collaborative contient un composant de conférence basée sur le Web et la transmission d'un ou plusieurs messages de routage au réseau (100) comprend des informations de routage relatives au composant de conférence basée sur le Web ; ou
le pont de conférence (608, 610, 612, 614, 616) est un dispositif de télécommunications à multiplexage par répartition dans le temps (TDM).

11. Procédé de routage d'une ou plusieurs demandes d'accès à une conférence collaborative selon la revendication 1, dans lequel :
le dispositif du demandeur (110) est un dispositif de communication au niveau d'un serveur de routage de conférence maître parmi une pluralité de serveurs de routage de conférence (602, 604, 606), dans lequel ledit un serveur de routage de conférence maître exécute une application de moteur de commande maître (418) ; et
la pluralité de ponts de conférence (608, 610, 612, 614, 616) est connectée à la pluralité de serveurs de routage de conférence (602, 604, 606).

12. Réseau de télécommunications (100) comprenant :
une pluralité de serveurs de routage de conférence collaborative comprenant un serveur de routage de conférence maître configuré pour exécuter une application de moteur de commande maître (418) et au moins un serveur de routage de conférence non-maître (602, 604, 606), dans lequel chacun de la pluralité de serveurs de routage de conférence collaborative comprend une base de données (404) configurée pour stocker un état d'au moins une conférence collaborative initiée sur le réseau de télécommunications (100) ; et
une pluralité de ponts de conférence (608, 610, 612, 614, 616) configurés pour héberger une conférence collaborative connectée à la pluralité de serveurs de routage de conférence collaborative (602, 604, 606) ;
dans lequel le moteur de commande maître (418) est configuré pour exécuter les opérations consistant à :
recevoir une demande d'accès à une conférence collaborative provenant d'un demandeur de façon à initier une conférence collaborative ;
associer un numéro d'identification à la demande d'accès à une conférence collaborative, le numéro d'identification étant associé à un client d'un réseau de télécommunications (100) ;
sélectionner un pont de conférence d'hébergement parmi la pluralité de ponts de conférence (608, 610, 612, 614, 616), la sélection étant effectuée en réponse à la demande d'accès à une conférence collaborative et au numéro d'identification ; et
transmettre un ou plusieurs messages d'état de conférence audit au moins un serveur de routage de conférence non-maître (602, 604, 606), dans lequel lesdits un ou plusieurs messages d'état de conférence comprennent un état actif de ladite au moins une conférence collaborative initiée et une indication du pont de conférence sélectionné (608, 610,612,614,616),
**caractérisé en ce que** :
au moins un serveur de routage de conférence collaborative (602, 604, 606) parmi la pluralité de serveurs de routage de conférence collaborative est configuré pour stocker un numéro d'identification dudit au moins un serveur de routage de conférence collaborative (602, 604, 606) ;
ledit au moins un serveur de routage de conférence collaborative parmi la pluralité de serveurs de routage de conférence collaborative (602, 604, 606) est configuré pour déterminer un nombre de ponts de conférence parmi la pluralité de ponts de conférence (608, 610, 612, 614, 616) auxquels ledit au moins un serveur de routage de conférence collaborative est connecté localement et pour stocker le nombre de ponts de conférence connectés localement (608, 610, 612, 614, 616) dans ladite au moins une base de données de serveur de routage de conférence collaborative (404) ;
ledit au moins un serveur de routage de conférence collaborative parmi la pluralité de serveurs de routage de conférence collaborative (602, 604, 606) est configuré pour exécuter les opérations consistant à :
recevoir un nombre de ponts de conférence connectés localement (608, 610, 612, 614, 616) à partir d'au moins un autre serveur de routage de conférence collaborative parmi la pluralité de serveurs de routage de conférence collaborative (602, 604, 606) ; et
calculer un nombre total de ponts de conférence connectés localement pour la pluralité de serveurs de routage de conférence collaborative (602, 604, 606) et stocker le nombre total de ponts de conférence connectés localement (608, 610, 612, 614, 616) pour la pluralité de serveurs de routage de conférence collaborative dans ladite au moins une base de données de serveur de routage de conférence collaborative (404) ;
le réseau de télécommunications (100) comprend en outre un module de détermination de moteur de commande maître configuré pour désigner le serveur de routage de conférence maître parmi la pluralité de serveurs de routage de conférence collaborative (602, 604, 606), dans lequel le module de détermination de moteur de commande maître est en outre configuré pour récupérer le numéro d'identification dudit au moins un serveur de routage de conférence collaborative, le nombre de ponts de conférence parmi la pluralité de ponts de conférence (608, 610, 612, 614, 616) auxquels ledit au moins un serveur de routage de conférence collaborative (602, 604, 606) est connecté localement, et le nombre total de ponts de conférence connectés localement (608, 610, 612, 614, 616) pour la pluralité de serveurs de routage de conférence collaborative à partir de la base de données (404) dudit au moins un serveur de routage de conférence collaborative.

13. Réseau de télécommunications (100) selon la revendication 12, dans lequel :
le réseau de télécommunications (100) est configuré pour router la demande d'accès à une conférence collaborative jusqu'au serveur de routage de conférence maître (602, 604, 606) à partir dudit au moins un serveur de routage de conférence non-maître ; ou
le moteur de commande maître (418) est configuré pour exécuter l'opération consistant à transmettre un ou plusieurs messages de routage au réseau de télécommunications, dans lesquels lesdits un ou plusieurs messages de routage contiennent une indication du pont de conférence sélectionné (608, 610, 612, 614, 616).

14. Réseau de télécommunications (100) selon la revendication 12, dans lequel l'opération de sélection comprend les étapes consistant à :
stocker un état temporaire associé au numéro d'identification dans la base de données (404) du serveur de routage de conférence maître (602, 604, 606) ;
transmettre une demande d'ouverture de ports de communication au pont de conférence d'hébergement (608, 610, 612, 614, 616) ; et
recevoir un message d'accusé de réception provenant du pont de conférence d'hébergement (608, 610, 612, 614, 616) et indiquant que les ports de communication demandés sont disponibles.

15. Réseau de télécommunications (100) selon la revendication 12, comprenant en outre :
le module de détermination de moteur de commande maître configuré pour désigner ledit au moins un serveur de routage de conférence collaborative au titre de serveur de routage de conférence maître (602, 604, 606) sur la base du nombre total de ponts de conférence connectés localement (608, 610, 612, 614, 616) pour la pluralité de serveurs de routage de conférence collaborative (602, 604, 606) ; ou
le module de détermination de moteur de commande maître configuré pour désigner ledit au moins un serveur de routage de conférence collaborative (602, 604, 606) au titre de serveur de routage de conférence maître sur la base du nombre de ponts de conférence connectés localement (608, 610, 612, 614, 616) pour ledit au moins un serveur de routage de conférence collaborative (602, 604, 606) ; ou
le module de détermination de moteur de commande maître configuré pour désigner ledit au moins un serveur de routage de conférence collaborative (602, 604, 606) au titre de serveur de routage de conférence maître sur la base du numéro d'identification dudit au moins un serveur de routage de conférence collaborative (602, 604, 606).
